(19)

Europäisches Patentamt
European Patent Office
Office européen des brevets

(11) **EP 4 329 075 A1**

(12) **EUROPEAN PATENT APPLICATION**
published in accordance with Art. 153(4) EPC

(43) Date of publication:
**28.02.2024 Bulletin 2024/09**

(21) Application number: **22799179.1**

(22) Date of filing: **09.05.2022**

(51) International Patent Classification (IPC):
*H01M 50/417* (2021.01)      *H01M 50/489* (2021.01)
*H01M 50/451* (2021.01)      *H01M 50/403* (2021.01)
*H01M 10/052* (2010.01)

(52) Cooperative Patent Classification (CPC):
**H01M 10/052; H01M 50/403; H01M 50/417;**
**H01M 50/451; H01M 50/489;** Y02E 60/10

(86) International application number:
**PCT/KR2022/006586**

(87) International publication number:
**WO 2022/235136 (10.11.2022 Gazette 2022/45)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **07.05.2021 KR 20210059584**

(71) Applicant: **LG Chem, Ltd.**
**Seoul 07336 (KR)**

(72) Inventors:
• **HAN, Sung-Jae**
  **Daejeon 34122 (KR)**
• **LEE, Joo-Sung**
  **Daejeon 34122 (KR)**
• **MUN, Sung Cik**
  **Daejeon 34122 (KR)**

(74) Representative: **Hoffmann Eitle**
**Patent- und Rechtsanwälte PartmbB**
**Arabellastraße 30**
**81925 München (DE)**

(54) **CROSSLINKED STRUCTURE-CONTAINING OLEFIN POLYMER POROUS SUPPORT, CROSSLINKED STRUCTURE-CONTAINING SEPARATOR COMPRISING SAME FOR LITHIUM SECONDARY BATTERY, MANUFACTURING METHOD THEREFOR, AND LITHIUM SECONDARY BATTERY COMPRISING SAME SEPARATOR**

(57)    The present disclosure relates to a crosslinked structure-containing polyolefin porous support which includes a crosslinked structure including polymer chains interconnected directly with one another, has a shutdown temperature of 145°C or less, causes no rupture after being exposed at 180°C for 1 minute, and shows a ratio of the puncture strength after being exposed at 180°C for 1 minute based on the puncture strength at 25°C of 50-100%. The present disclosure also relates to a crosslinked structure-containing separator for a lithium secondary battery including the crosslinked structure-containing polyolefin porous support, a method for manufacturing the same, and a lithium secondary battery including the same.

FIG. 1

<u>1</u>

FIG. 2

<u>1'</u>

EP 4 329 075 A1

**Description**

TECHNICAL FIELD

The present application claims priority to Korean Patent Application No. 10-2021-0059584 filed on May 7, 2021 in the Republic of Korea.

The present disclosure relates to a crosslinked structure-containing polyolefin porous support, a crosslinked structure-containing separator for a lithium secondary battery including the same, a method for manufacturing the same, and a lithium secondary battery including the separator.

BACKGROUND ART

Recently, energy storage technology has been given an increasing attention. As the application of energy storage technology has been extended to energy for cellular phones, camcorders and notebook PCs and even to energy for electric vehicles, there has been an increasing need for providing batteries used as power sources for such electronic devices with high energy density. Lithium secondary batteries are those satisfying such a need best. Therefore, active studies have been conducted about such lithium secondary batteries.

Such a lithium secondary battery includes a positive electrode, a negative electrode, an electrolyte and a separator. Particularly, it is required for the separator to have insulation property for separating and electrically insulating the positive electrode and the negative electrode from each other and high ion conductivity for increasing lithium-ion permeability based on high porosity.

Since a separator functions to insulate a positive electrode and a negative electrode electrically from each other, it should insulate the positive electrode and the negative electrode electrically from each other, even when the battery is subjected to an abnormal situation, such as high temperature. However, in the case of a polyolefin separator used widely as a separator, it has a low melting point ($T_m$) and may cause ignition and explosion, when a battery is used abnormally and the battery temperature is increased to the melting point of polyethylene or higher to generate a meltdown phenomenon, and also shows a severe heat shrinking behavior under a high temperature condition due to its material property and characteristics during its manufacturing process, thereby causing a safety-related problem, such as an internal short-circuit.

Therefore, there is an imminent need for a separator capable of ensuring safety at high temperature.

DISCLOSURE

Technical Problem

The present disclosure is designed to solve the problems of the related art, and therefore the present disclosure is directed to providing a crosslinked structure-containing polyolefin porous support having improved high-temperature safety, while maintaining its shutdown temperature.

The present disclosure is also directed to providing a crosslinked structure-containing separator for a lithium secondary battery including the crosslinked structure-containing polyolefin porous support, and a lithium secondary battery including the same.

In addition, the present disclosure is directed to providing a simplified method for manufacturing a crosslinked structure-containing separator for a lithium secondary battery having improved high-temperature safety, while maintaining its shutdown temperature.

Technical Solution

In one aspect of the present disclosure, there is provided a crosslinked structure-containing polyolefin porous support according to any one of the following embodiments.

According to the first embodiment, there is provided a crosslinked structure-containing polyolefin porous support which includes a crosslinked structure including polymer chains interconnected directly with one another, has a shutdown temperature of 145°C or less, causes no rupture after being exposed at 180°C for 1 minute, and shows a ratio of the puncture strength after being exposed at 180°C for 1 minute based on the puncture strength at 25°C of 50-100%.

According to the second embodiment, there is provided the crosslinked structure-containing polyolefin porous support as defined in the first embodiment, which shows a puncture strength of 50 gf or more after being exposed at 180°C for 1 minute.

According to the third embodiment, there is provided the crosslinked structure-containing polyolefin porous support as defined in the first or the second embodiment, which shows a tensile strength of 500 kgf/cm$^2$ or more in each of the machine direction and the transverse direction, after being exposed at 180°C for 1 minute.

According to the fourth embodiment, there is provided the crosslinked structure-containing polyolefin porous support as defined in any one of the first to the third embodiments, which has a crosslinking degree of 10-45%.

In another aspect of the present disclosure, there is provided a crosslinked structure-containing separator for a lithium secondary battery according to any one of the following embodiments.

According to the fifth embodiment, there is provided a crosslinked structure-containing separator for a lithium secondary battery including the crosslinked structure-containing polyolefin support as defined in any one of the first to the fourth embodiments.

According to the sixth embodiment, there is provided the crosslinked structure-containing separator for a lithium secondary battery as defined in the fifth embodiment, which further includes an inorganic composite porous layer disposed on at least one surface of the crosslinked structure-containing polyolefin porous support and including an inorganic filler and a binder polymer.

According to the seventh embodiment, there is provided the crosslinked structure-containing separator for a lithium secondary battery as defined in the fifth embodiment, which further includes: an inorganic composite porous layer disposed on at least one surface of the crosslinked structure-containing polyolefin porous support and including an inorganic filler and a first binder polymer; and

a porous adhesive layer disposed on the inorganic composite porous layer and including a second binder polymer.

According to the eighth embodiment, there is provided the crosslinked structure-containing separator for a lithium secondary battery as defined in any one of the fifth to the seventh embodiments, which has a meltdown temperature of 160°C or higher.

According to the ninth embodiment, there is provided the crosslinked structure-containing separator for a lithium secondary battery as defined in the seventh or the eighth embodiment, wherein the weight ratio of the inorganic filler to the first binder polymer is 95:5-99.9:0.1.

According to the tenth embodiment, there is provided the crosslinked structure-containing separator for a lithium secondary battery as defined in any one of the seventh to the ninth embodiments, wherein the first binder polymer includes an acrylic polymer, polyacrylic acid, styrene butadiene rubber, polyvinyl alcohol, or two or more of them.

According to the eleventh embodiment, there is provided the crosslinked structure-containing separator for a lithium secondary battery as defined in any one of the seventh to the tenth embodiments, wherein the second binder polymer includes poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

In still another aspect of the present disclosure, there is provided a method for manufacturing a crosslinked structure-containing separator for a lithium secondary battery according to any one of the following embodiments.

According to the twelfth embodiment, there is provided a method for manufacturing a crosslinked structure-containing separator for a lithium secondary battery, including the steps of:

preparing a polyolefin porous support including a photoinitiator; and
irradiating ultraviolet rays to the polyolefin porous support including a photoinitiator,
wherein the content of the photoinitiator is 0.015-0.36 parts by weight based on 100 parts by weight of the polyolefin porous support.

According to the thirteenth embodiment, there is provided the method for manufacturing a crosslinked structure-containing separator for a lithium secondary battery as defined in the twelfth embodiment, wherein the step of preparing a polyolefin porous support including a photoinitiator includes coating and drying a photo-crosslinking composition containing a photoinitiator and a solvent on the outer side of the polyolefin porous support.

According to the fourteenth embodiment, there is provided the method for manufacturing a crosslinked structure-containing separator for a lithium secondary battery as defined in the thirteenth embodiment, wherein the photo-crosslinking composition is a slurry for forming an inorganic composite porous layer including an inorganic filler, a binder polymer, the photoinitiator and the solvent.

According to the fifteenth embodiment, there is provided the method for manufacturing a crosslinked structure-containing separator for a lithium secondary battery as defined in the thirteenth embodiment, wherein the step of coating and drying a photo-crosslinking composition containing a photoinitiator and a solvent on the outer side of the polyolefin porous support includes:

coating a slurry for forming an inorganic composite porous layer including an inorganic filler, a first binder polymer and a dispersion medium on at least one surface of the polyolefin porous support, followed by drying, to form an inorganic composite porous layer; and
applying a coating solution for forming a porous adhesive layer including a second binder polymer, the photoinitiator and the solvent to the top surface of the inorganic composite porous layer, followed by drying.

According to the sixteenth embodiment, there is provided the method for manufacturing a crosslinked structure-containing separator for a lithium secondary battery as defined in any one of the twelfth to the fifteenth embodiments, wherein the photoinitiator includes a Type 2 photoinitiator.

According to the seventeenth embodiment, there is provided the method for manufacturing a crosslinked structure-containing separator for a lithium secondary battery as defined in any one of the twelfth to the sixteenth embodiments, wherein the photoinitiator includes thioxanthone (TX), a thioxanthone derivative, benzophenone (BPO), a benzophenone derivative, or two or more of them.

According to the eighteenth embodiment, there is provided the method for manufacturing a crosslinked structure-containing separator for a lithium secondary battery as defined in any one of the twelfth to the seventh embodiments, wherein the ultraviolet rays are irradiated at an irradiation light dose of 10-2000 mJ/cm$^2$.

In still another aspect of the present disclosure, there is provided a lithium secondary battery according to the following embodiment.

According to the nineteenth embodiment, there is provided a lithium secondary battery including a positive electrode, a negative electrode and a separator interposed between the positive electrode and the negative electrode, wherein the separator is the crosslinked structure-containing separator for a lithium secondary battery as defined in any one of the fifth to the eleventh embodiments.

Advantageous Effects

The crosslinked structure-containing polyolefin porous support according to an embodiment of the present disclosure has improved high-temperature safety, while showing a low shutdown temperature.

The crosslinked structure-containing separator for a lithium secondary battery including the crosslinked structure-containing polyolefin porous support according to an embodiment of the present disclosure has improved high-temperature safety, while showing a low shutdown temperature, by virtue of the crosslinked structure-containing polyolefin porous support.

According to the method for manufacturing a crosslinked structure-containing separator for a lithium secondary battery according to an embodiment of the present disclosure, it is possible to obtain a crosslinked structure-containing separator for a lithium secondary battery having improved high-temperature safety, while showing a low shutdown temperature, through a simplified process.

DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.

FIG. 1 is a schematic view illustrating the crosslinked structure-containing separator for a lithium secondary battery according to an embodiment of the present disclosure.
FIG. 2 is a schematic view illustrating the crosslinked structure-containing separator for a lithium secondary battery according to another embodiment of the present disclosure.

BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

Throughout the specification, the terms, such as 'first' and 'second', are used to differentiate one constitutional element from the other constitutional elements, and each constitutional element is not limited to such terms.

The crosslinked structure-containing polyolefin porous support according to an embodiment of the present disclosure includes a crosslinked structure including polymer chains interconnected directly with one another, has a shutdown temperature of 145°C or less, causes no rupture after being exposed at 180°C for 1 minute, and shows a ratio of the puncture strength after being exposed at 180°C for 1 minute based on the puncture strength at 25°C of 50-100%.

Herein, the expression 'crosslinked structure including polymer chains interconnected directly with one another' means a structure in which polymer chains substantially including polyolefin, preferably, including polyolefin alone, are provided with reactivity through the addition of a photoinitiator, and are crosslinked directly with one another. Therefore, crosslinking that occurs between polymer chains and an additionally introduced crosslinking agent does not correspond to 'crosslinked structure including polymer chains interconnected directly with one another' as defined herein. In addition, crosslinking that occurs between such an additional crosslinking agent and polymer chains does not correspond to 'crosslinked structure including polymer chains interconnected directly with one another' as define herein, even though the polymer chains substantially include polyolefin or include polyolefin alone.

Photoinitiators may be crosslinked with one another, or a photoinitiator may be crosslinked with a polymer chain. However, such a crosslinked structure has a lower reaction enthalpy as compared to the crosslinked structure among the polymer chains in the polyolefin porous support, and may be decomposed to cause side reactions. According to an embodiment of the present disclosure, the crosslinked structure-containing polyolefin porous support may include only the crosslinked structure including polymer chains interconnected directly with one another, while not including the crosslinked structure including a polymer chain interconnected directly with a photoinitiator.

According to an embodiment of the present disclosure, the crosslinked structure-containing polyolefin porous support includes only the crosslinked structure including polymer chains interconnected directly with one another, while not including the crosslinked structure including a polymer chain interconnected directly with a photoinitiator.

According to an embodiment of the present disclosure, the polyolefin porous support may be a porous film.

According to an embodiment of the present disclosure, the polyolefin may include polyethylene; polypropylene; polybutylene; polypentene; polyhexene; polyoctene; a copolymer of at least two of ethylene, propylene, butene, pentene, 4-methylpentene, hexane, heptane and octene; or a mixture thereof.

Non-limiting examples of the polyethylene include low-density polyethylene (LDPE), linear low-density polyethylene (LLDPE), high-density polyethylene (HDPE), or the like. Among those, when the polyethylene is high-density polyethylene having a high crystallization degree and a high resin melting point, it is possible to provide a desired level of heat resistance and an increased modulus.

According to an embodiment of the present disclosure, the polyolefin may have a weight average molecular weight of 200,000-1,500,000, 220,000-100,000, or 250,000-800,000. When the polyolefin has the above-defined range of weight average molecular weight, it is possible to provide excellent strength and heat resistance, while ensuring the uniformity and film-forming processability of the polyolefin porous support.

Herein, the weight average molecular weight may be determined by using gel permeation chromatography (GPC) (PL GPC220, Agilent Technologies) under the following analysis conditions:

- Column: PL Olexis (Polymer Laboratories)
- Solvent: Trichlorobenzene (TCB)
- Flow rate: 1.0 mL/min
- Sample concentration: 1.0 mg/mL
- Injection amount: 200 $\mu$L
- Column temperature: 160°C
- Detector: Agilent High Temperature RI detector
- Standard: Polystyrene (corrected with tertiary function)

According to an embodiment of the present disclosure, the crosslinked structure-containing polyolefin porous support may have a crosslinking degree of 10-45%, 15-40%, or 20-35%. When the crosslinked structure-containing polyolefin porous support has the above-defined range of crosslinking degree, it is possible to provide an increased modulus with ease, while providing a desired level of heat resistance. For example, when the crosslinked structure-containing polyolefin porous support has a crosslinking degree of 20% or more, the crosslinked structure-containing polyolefin porous support may easily have a meltdown temperature of 170°C or higher.

Herein, the crosslinking degree is determined by dipping the crosslinked structure-containing polyolefin porous support in xylene solution at 135°C, boiling it therein for 12 hours and measuring the residual weight, according to ASTM D2765, and is calculated as a percentage of the residual weight based on the initial weight.

In the crosslinked structure-containing polyolefin porous support, double bonds may be formed in the polyolefin chain through the crosslinking using a photoinitiator. Since side reactions may occur at the sites of the double bonds, the number of such double bonds may affect the performance of the crosslinked structure-containing polyolefin porous support.

According to an embodiment of the present disclosure, the crosslinked structure-containing polyolefin porous support may have a number of double bonds present in the polyolefin chains of 0.01-0.6 or 0.02-0.5 per 1000 carbon atoms, as determined by $^1$H-NMR. When the crosslinked structure-containing polyolefin porous support has the above-defined number of double bonds, it is possible to minimize side reactions.

According to an embodiment of the present disclosure, the number of double bonds present in the polyolefin chains, except the ends, of the crosslinked structure-containing polyolefin porous support may be 0.005-0.59 per 1000 carbon atoms. Herein, 'double bonds present in the polyolefin chains, except the ends' refers to double bonds present throughout the polyolefin chains, except the ends of the polyolefin chains. In addition, the term 'end' refers to the position of carbon atom linked to each of the both terminals of the polyolefin chains.

According to an embodiment of the present disclosure, the crosslinked structure-containing polyolefin porous support may have a thickness of 3-16 μm, or 5-12 μm. When the crosslinked structure-containing polyolefin porous support has the above-defined range of thickness, it is possible to ensure energy density, while preventing the separator from being damaged easily during the use of a battery.

Since the crosslinked structure-containing polyolefin porous support according to an embodiment of the present disclosure has a crosslinked structure including polymer chains interconnected directly with one another, it may have improved heat resistance.

The crosslinked structure-containing polyolefin porous support according to an embodiment of the present disclosure may retain substantially the same pore structure as the polyolefin porous support before crosslinking, even after crosslinking.

The crosslinked structure-containing polyolefin porous support according to an embodiment of the present disclosure has a shutdown temperature of 145°C or less. In addition, it causes no rupture after being exposed at 180°C for 1 minute, and shows a ratio of the puncture strength after being exposed at 180°C for 1 minute based on the puncture strength at 25°C of 50-100%.

According to an embodiment of the present disclosure, the crosslinked structure-containing polyolefin porous support according to an embodiment of the present disclosure has a shutdown temperature of 140°C or less, 133-140°C, or 135-140°C.

The shutdown temperature may be determined by fixing the crosslinked structure-containing polyolefin porous support to an air permeability tester, and measuring the temperature where the crosslinked structure-containing polyolefin porous support shows a rapid increase in air permeability upon heating. For example, The shutdown temperature may be determined by measuring a time (sec) required for 100 cc of air to pass through the crosslinked structure-containing polyolefin porous support under a constant pressure of 0.05 MPa under heating at a rate for 5°C per minute by using an air permeability tester (Model Name: EG01-55-1MR, available from Asahi Seiko Co.), and taking the temperature where the crosslinked structure-containing polyolefin porous support shows a rapid increase in air permeability as the shutdown temperature.

The crosslinked structure-containing polyolefin porous support according to an embodiment of the present disclosure has improved high-temperature safety, and can retain its shape even after being exposed at 180°C for 1 minute.

Whether the crosslinked structure-containing polyolefin porous support is ruptured or not after being exposed at 180°C for 1 minute may be determined by forming a frame having a size of width 20 cm x length 20 cm, fixing the crosslinked structure-containing polyolefin support thereto by using a heat resistant tape, introducing the frame to a hot oven set to 180°C, allowing the frame to stand for 1 minute, and determining whether the crosslinked structure-containing polyolefin porous support is ruptured or not by the naked eyes.

Even though the conventional polyolefin porous supports have improved heat resistance and cause no rupture after being exposed at 180°C for 1 minute, it is damaged during the heat treatment at 180°C and does not have sufficient mechanical strength.

In the crosslinked structure-containing polyolefin porous support according to an embodiment of the present disclosure, crosslinking occurs between the polymer chains to such a level that shrinking of the polyolefin porous support or main chain scission of polyolefin does not occur. Therefore, the crosslinked structure-containing polyolefin porous support shows a ratio of the puncture strength after being exposed at 180°C for 1 minute based on the puncture strength at 25°C of 50-100%. As a result, it causes no significant decrease in puncture strength after being exposed at 180°C for 1 minute, as compared to the puncture strength at 25°C. Therefore, it has sufficient mechanical strength even at a high temperature of 180°C.

The puncture strength at 25°C may be determined according to ASTM D2582. Particularly, after setting a round tip with a diameter of 1 mm to operate at a rate of 120 mm/min, the puncture strength may be determined at 25°C according to ASTM D2582.

The puncture strength after being exposed at 180°C for 1 minute may be determined according to ASTM D2582. Particularly, after exposing a specimen at 180°C for 1 minute and setting a round tip with a diameter of 1 mm to operate at a rate of 120 mm/min, the puncture strength may be determined at 25°C according to ASTM D2582.

According to an embodiment of the present disclosure, the crosslinked structure-containing polyolefin porous support shows a ratio of the puncture strength after being exposed at 180°C for 1 minute based on the puncture strength at 25°C of 50-80%, 50-55%, 50-54.9%, or 51.8-54.9%. When the crosslinked structure-containing polyolefin porous support satisfies the above-defined ratio of the puncture strength after being exposed at 180°C for 1 minute based on the puncture strength at 25°C, it may have sufficient mechanical strength even at a high temperature of 180°C.

According to an embodiment of the present disclosure, the crosslinked structure-containing polyolefin porous support may have a puncture strength of 50 gf or more, 100 gf or more, 100-700 gf, 150-500 gf, 200-300 gf, or 210-225 gf, after being exposed at 180°C for 1 minute. When the crosslinked structure-containing polyolefin porous support satisfies the above-defined range of the puncture strength after being exposed at 180°C for 1 minute, it may have sufficient mechanical strength even at a high temperature of 180°C.

According to an embodiment of the present disclosure, the crosslinked structure-containing polyolefin porous support may have a tensile strength in each of the machine direction and the transverse direction of 500 kgf/cm$^2$ or more, 700 kgf/cm$^2$ or more, 700-1500 kgf/cm$^2$, or 780-1335 kgf/cm$^2$, after being exposed at 180°C for 1 minute. When the crosslinked structure-containing polyolefin porous support satisfies the above-defined range of the tensile strength after being exposed at 180°C for 1 minute, it may have sufficient mechanical strength even at a high temperature of 180°C.

The tensile strength after being exposed at 180°C for 1 minute may be determined by exposing a specimen at after being exposed at 180°C for 1 minute, and measuring the strength of the specimen at the point of breaking, when the specimen is drawn in each of the machine direction and the transverse direction at a rate of 50 mm/min by using Universal Testing Systems (Instron® 3345) at 25°C according to ASTM D882.

The crosslinked structure-containing porous support according to an embodiment of the present disclosure may be used as a crosslinked structure-containing separator for a lithium secondary battery.

The crosslinked structure-containing separator for a lithium secondary battery according to an embodiment of the present disclosure may include the crosslinked structure-containing porous support according to an embodiment of the present disclosure.

According to an embodiment of the present disclosure, when the crosslinked structure-containing polyolefin porous support includes a crosslinked structure-containing polyolefin separator having the above-defined number of double bonds, it is possible to prevent the problem of degradation of battery performance at high temperature and/or high voltage.

The crosslinked structure-containing separator for a lithium secondary battery according to an embodiment of the present disclosure may include the crosslinked structure-containing porous support according to an embodiment of the present disclosure.

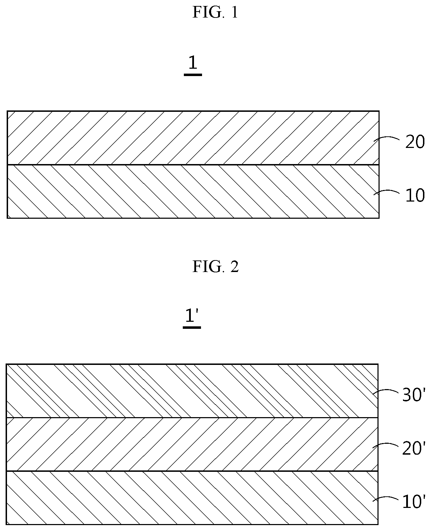

The crosslinked structure-containing separator for a lithium secondary battery according to another embodiment of the present disclosure may further include an inorganic composite porous layer disposed on at least one surface of the crosslinked structure-containing polyolefin porous support and including an inorganic filler and a binder polymer. FIG. 1 illustrates the crosslinked structure-containing separator for a lithium secondary battery according to an embodiment of the present disclosure.

Referring to FIG. 1, the crosslinked structure-containing separator 1 for a lithium secondary battery according to an embodiment of the present disclosure includes: a crosslinked structure-containing polyolefin porous support 10; and an inorganic composite porous layer 20 disposed on at least one surface of the crosslinked structure-containing polyolefin porous support 10 and including an inorganic filler and a binder polymer.

The inorganic composite porous layer 20 may be formed on one surface or both surfaces of the crosslinked structure-containing polyolefin porous support 10. The inorganic composite porous layer 20 includes a binder polymer which attaches the inorganic filler particles to one another so that they may retain their binding states (i.e. the binder polymer interconnects and fixes the inorganic filler particles), and the inorganic filler may be bound to the crosslinked structure-containing polyolefin porous support 10 by the binder polymer. The inorganic composite porous layer 20 prevents the crosslinked structure-containing polyolefin porous support 10 from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 120°C for 30 minutes.

As used herein, 'machine direction' refers to the direction of progress during the continuous production of a separator, i.e. the longitudinal direction of the separator, while 'transverse direction' refers to the transverse direction to the machine direction, i.e. the direction perpendicular to the direction of progress during the continuous production of a separator, i.e. the direction perpendicular to the longitudinal direction of the separator.

There is no particular limitation in the inorganic filler, as long as it is electrochemically stable. In other words, there is no particular limitation in the inorganic filler, as long as it causes no oxidation and/or reduction in the range (e.g. 0-5 V based on Li/Li$^+$) of operating voltage of an applicable electrochemical device. Particularly, when using an inorganic filler having a high dielectric constant, it is possible to improve the ion conductivity of an electrolyte by increasing the dissociation degree of an electrolyte salt, such as a lithium salt, in a liquid electrolyte.

For the above-mentioned reasons, according to an embodiment of the present disclosure, the inorganic filler may be an inorganic filler having a high dielectric constant of 5 or more, or 10 or more. Non-limiting examples of the inorganic filler having a dielectric constant of 5 or more may include any one selected from the group consisting of $BaTiO_3$, $Pb(Zr,Ti)O_3$ (PZT), $Pb_{1-x}La_xZr_{1-y}Ti_yO_3$ (PLZT, wherein $0 < x < 1$, $0 < y < 1$), $Pb(Mg_{1/3}Nb_{2/3})O_3$-$PbTiO_3$ (PMN-PT), hafnia ($HfO_2$), $SrTiO_3$, $SnO_2$, $CeO_2$, MgO, $Mg(OH)_2$, NiO, CaO, ZnO, $ZrO_2$, $SiO_2$, $Y_2O_3$, $Al_2O_3$, AlOOH, $Al(OH)_3$, SiC, $TiO_2$, or a mixture thereof.

According to another embodiment of the present disclosure, the inorganic filler may be an inorganic filler having lithium-ion transportability, i.e. inorganic filler containing lithium elements and capable of transporting lithium ions, while not storing lithium. Non-limiting examples of the inorganic filler having lithium-ion transportability include lithium phosphate ($Li_3PO_4$), lithium titanium phosphate ($Li_xTi_y(PO_4)_3$, $0 < x < 2$, $0 < y < 3$), lithium aluminum titanium phosphate ($Li_xAl_yTi_z(PO_4)_3$, $0 < x < 2$, $0 < y < 1$, $0 < z < 3$), $(LiAlTiP)_xO_y$-based glass ($1 < x < 4$, $0 < y < 13$), such as $14Li_2O$-$9Al_2O_3$-$38TiO_2$-$39P_2O_5$, lithium lanthanum titanate ($Li_xLa_yTiO_3$, $0 < x < 2$, $0 < y < 3$), lithium germanium thiophosphate ($Li_xGe_yP_zS_w$, $0 < x < 4$, $0 < y < 1$, $0 < z < 1$, $0 < w < 5$), such as $Li_{3.25}Ge_{0.25}P_{0.75}S_4$, lithium nitride ($Li_xN_y$, $0 < x < 4$, $0 < y < 2$), such as $Li_3N$, $SiS_2$-based glass ($Li_xSi_yS_z$, $0 < x < 3$, $0 < y < 2$, $0 < z < 4$), such as $Li_3PO_4$-$Li_2S$-$SiS_2$, and $P_2S_5$-based glass ($Li_xP_yS_z$, $0 < x < 3$, $0 < y < 3$, $0 < z < 7$) , such as $LiILi_2S$-$P_2S_5$, or a mixture thereof.

According to an embodiment of the present disclosure, the inorganic filler may have an average particle diameter of 0.01-1.5 μm. When the inorganic filler has the above-defined range of average particle diameter, it is possible to form an inorganic composite porous layer having a uniform thickness and suitable porosity and to provide high dispersibility of inorganic filler and desired energy density.

Herein, the average particle diameter of the inorganic filler means $D_{50}$ particle diameter, and '$D_{50}$' means the particle diameter at the point of 50% in the particle number accumulated distribution as a function of particle diameter. The particle diameter may be determined by using the laser diffraction method. Particularly, a powder to be analyzed is dispersed in a dispersion medium and introduced to a commercially available laser diffraction particle size analyzer (e.g. Microtrac S3500) to measure a difference in diffraction pattern depending on particle size, when the particles pass through laser beams, and then particle size distribution can be calculated. Then, $D_{50}$ may be determined by calculating the particle diameter at the point of 50% in the particle number accumulated distribution depending on particle diameter in the analyzer system.

The binder polymer may have a glass transition temperature ($T_g$) of -200 to 200°C. When the binder polymer satisfies the above-defined range of glass transition temperature, it can provide the finished inorganic composite porous layer 20 with improved mechanical properties, such as flexibility and elasticity. The binder polymer may have ion conductivity. When the binder polymer has ion conductivity, it is possible to further improve the performance of a battery. The binder polymer may have a dielectric constant ranging from 1.0 to 100 (measured at a frequency of 1 kHz), or from 10 to 100. When the binder polymer has the above-defined range of dielectric constant, it is possible to improve the salt dissociation degree in an electrolyte.

According to an embodiment of the present disclosure, the binder polymer may include poly(vinylidene fluoride-co-hexafluoropropylene), poly(vinylidene fluoride-co-chlorotrifluoroethylene), poly(vinylidene fluoride-co-tetrafluoroethylene), poly(vinylidene fluoride-co-trichloroethylene), acrylic copolymer, styrene-butadiene copolymer, poly(acrylic acid), poly(methyl methacrylate), poly(butyl acrylate), poly(acrylonitrile), poly(vinyl pyrrolidone), poly(vinyl alcohol), poly(vinyl acetate), poly(ethylene-co-vinyl acetate), poly(ethylene oxide), poly(arylate), cellulose acetate, cellulose acetate butyrate, cellulose acetate propionate, cyanoethylpullulan, cyanoethylpolyvinylalchol, cyanoethyl cellulose, cyanoethyl sucrose, pullulan, carboxymethyl cellulose, or two or more of them.

The acrylic copolymer may include, but is not limited to: ethyl acrylate-acrylic acid-N,N-dimethyl acrylamide copolymer, ethyl acrylate-acrylic acid-2-(dimethylamino)ethyl acrylate copolymer, ethyl acrylate-acrylic acid-N,N-diethylacrylamide copolymer, ethyl acrylate-acrylic acid-2-(diethylamino)ethyl acrylate copolymer, or two or more of them.

According to an embodiment of the present disclosure, the weight ratio of the inorganic filler to the binder polymer is determined considering the thickness, pore size and porosity of the finished inorganic composite porous layer 20, and may be 50:50-99.9:0.1, or 60:40-99.5:0.5. When the weight ratio of the inorganic filler to the binder polymer satisfies the above-defined range, it is possible to ensure vacant spaces formed among the inorganic filler particles sufficiently, and thus to ensure the pore size and porosity of the inorganic composite porous layer 20 with ease. In addition, it is possible to ensure the adhesion among the inorganic filler particles with ease.

According to an embodiment of the present disclosure, the inorganic composite porous layer 20 may further include additives, such as a dispersant and/or a thickener. According to an embodiment of the present disclosure, the additives may include polyvinyl pyrrolidone (PVP), hydroxyethyl cellulose (HEC), hydroxypropyl cellulose (HPC), ethylhydroxyethyl cellulose (EHEC), methyl cellulose (MC), carboxymethyl cellulose (CMC), hydroxyalkylmethyl cellulose, cyanoethylene polyvinyl alcohol, or two or more of them.

According to an embodiment of the present disclosure, the inorganic composite porous layer 20 may have a structure in which the inorganic filler particles are bound to one another by the binder polymer, while they are packed in contact with one another. In this manner, interstitial volumes are formed among the inorganic filler particles, and the interstitial volumes become vacant spaces to form pores.

According to another embodiment of the present disclosure, the inorganic composite porous layer 20 may have a structure including: a plurality of nodes including an inorganic filler, and a binder polymer at least partially covering the surface of the inorganic filler; and at least one filament formed from the binder polymer of the nodes in a thread-like shape, wherein the filament has a node-linking portion extended from one node for linking with another node, and the node-linking portion forms a three-dimensional network structure through the filaments derived from the binder polymer and crossing one another.

According to an embodiment of the present disclosure, the inorganic composite porous layer 20 may have an average pore size of 0.001-10 μm. The average pore size of the inorganic composite porous layer 20 may be determined by using the capillary flow porometry. The capillary flow porometry measures the diameter of the smallest pore in the thickness direction. Therefore, in order to determine the average pore size of the inorganic composite porous layer 20 alone by the capillary flow porometry, it is required to separate the inorganic composite porous layer 20 from the crosslinked structure-containing polyolefin porous support 10, and to surround the separated inorganic composite porous layer 20 with a non-woven web capable of supporting the same. Herein, the non-woven web should have a significantly larger pore size as compare to the pore size of the inorganic composite porous layer 20.

According to an embodiment of the present disclosure, the inorganic composite porous layer 20 may have a porosity of 5-95%, 10-95%, 20-90%, or 30-80%. The porosity corresponds to a value obtained by subtracting the volume expressed from the weight and density of each ingredient in the inorganic composite porous coating layer 20, from the volume calculated from the thickness, width and length of the inorganic composite porous coating layer 20.

The porosity of the inorganic composite porous layer 20 may be determined from scanning electron microscopic (SEM) images, by using a mercury porosimeter, or through the BET 6-point method based on nitrogen gas adsorption flow using a porosimetry analyzer (e.g. Belsorp-II mini, Bell Japan Inc.).

According to an embodiment of the present disclosure, the inorganic composite porous layer 20 may have a thickness of 1.5-5.0 μm on one surface of the crosslinked structure-containing polyolefin porous support 10. When the thickness of the inorganic composite porous layer 20 satisfies the above-defined range, it is possible to provide high adhesion to an electrode and increased cell strength of a battery.

The crosslinked structure-containing separator for a lithium secondary battery according to another embodiment of the present disclosure may further include: an inorganic composite porous layer disposed on at least one surface of a crosslinked structure-containing polyolefin porous support and containing an inorganic filler and a first binder polymer; and a porous adhesive layer disposed on the inorganic composite porous layer and containing a second binder polymer. FIG. 2 illustrates the crosslinked structure-containing separator for a lithium secondary battery according to another embodiment of the present disclosure.

Referring to FIG. 2, the crosslinked structure-containing separator 1' for a lithium secondary battery according to another embodiment of the present disclosure includes: a crosslinked structure-containing polyolefin porous support 10'; an inorganic composite porous layer 20' disposed on at least one surface of the crosslinked structure-containing polyolefin porous support 10' and including an inorganic filler and a first binder polymer; and a porous adhesive layer 30' disposed on the inorganic composite porous layer 20' and including a second binder polymer.

The inorganic composite porous layer 20' may be formed on one surface or both surfaces of the crosslinked structure-containing polyolefin porous support 10'. The inorganic composite porous layer 20' includes an inorganic filler, and a first binder polymer which attaches the inorganic filler particles to one another so that they may retain their binding states (i.e. the first binder polymer interconnects and fixes the inorganic filler particles), and the inorganic filler may be bound to the crosslinked structure-containing polyolefin porous support 10' by the first binder polymer. The inorganic composite porous layer 20' prevents the crosslinked structure-containing polyolefin porous support 10' from undergoing a severe heat shrinking behavior at high temperature by virtue of the inorganic filler to improve the safety of the separator. For example, the separator may show a heat shrinkage of 20% or less, 2-15%, or 2-10% in each of the machine direction and the transverse direction, as determined after allowing the separator to stand at 150°C for 30 minutes.

Reference will be made to the above description about the inorganic filler.

The first binder polymer may have a glass transition temperature ($T_g$) of -200 to 200°C. When the first binder polymer satisfies the above-defined range of glass transition temperature, it can provide the finished inorganic composite porous layer 20' with improved mechanical properties, such as flexibility and elasticity. The first binder polymer may have ion conductivity. When the first binder polymer has ion conductivity, it is possible to further improve the performance of a battery. The first binder polymer may have a dielectric constant ranging from 1.0 to 100 (measured at a frequency of 1 kHz), or from 10 to 100. When the first binder polymer has the above-defined range of dielectric constant, it is possible to improve the salt dissociation degree in an electrolyte.

According to an embodiment of the present disclosure, the first binder polymer may be a binder polymer having excellent heat resistance. When the first binder polymer has excellent heat resistance, the inorganic composite porous layer may have further improved heat resistance. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes.

According to an embodiment of the present disclosure, the first binder polymer may include acrylic polymer, polyacrylic acid, styrene butadiene rubber, polyvinyl alcohol, or two or more of them.

Particularly, the acrylic polymer may include acrylic homopolymer prepared by polymerizing acrylic monomers alone, or copolymers of acrylic monomers with another monomers. For example, the acrylic polymer may include copolymer of ethylhexyl acrylate with methyl methacrylate, polymethyl methacrylate, polyethylhexyl acrylate, polybutyl acrylate, polyacrylonitrile, copolymer of butyl acrylate with methyl methacrylate, or two or more of them.

According to an embodiment of the present disclosure, the first binder polymer may be a particle-shaped binder polymer.

According to an embodiment of the present disclosure, the weight ratio of the inorganic filler to the first binder polymer may be 95:5-99.9:0.1, 96:4-99.5:0.5, or 97:3-99: 1. When the weight ratio of the inorganic filler to the first binder polymer falls within the above-defined range, a large amount of inorganic filler is distributed per unit area of the separator to provide the separator with improved thermal safety. For example, the separator may show a heat shrinkage of 20% or less, 2-15%, 2-10%, 2-5%, 0-5%, or 0-2% in each of the machine direction and the transverse direction, as determined after allowing the separator to stand at 150°C for 30 minutes. In addition, it is possible to sufficiently ensure vacant spaces formed among the inorganic filler particles, while ensuring sufficient adhesion among the inorganic filler particles.

Hereinafter, the inorganic composite porous layer 20' will be explained merely about the characteristics different from the above-mentioned inorganic composite porous layer 20.

According to an embodiment of the present disclosure, the inorganic composite porous layer may have a structure in which the inorganic filler particles are bound to one another by the first binder polymer, while they are packed in contact with one another. In this manner, interstitial volumes are formed among the inorganic filler particles, and the interstitial volumes become vacant spaces to form pores.

The porous adhesive layer 30' includes a second binder polymer so that the separator including the inorganic composite porous layer 20' may ensure adhesion to an electrode. In addition, the porous adhesive layer 30' have pores formed therein to prevent an increase in resistance of the separator.

According to an embodiment of the present disclosure, the second binder polymer in the porous adhesive layer 30' cannot infiltrate to the surface and/or inner part of the crosslinked structure-containing polyolefin porous support 10' to minimize an increase in resistance of the separator.

The second binder polymer may be a binder polymer used conventionally for forming an adhesive layer. The second binder polymer may have a glass transition temperature ($T_g$) of -200 to 200°C. When the second binder polymer satisfies the above-defined range of glass transition temperature, it can provide the finished adhesive layer with improved mechanical properties, such as flexibility and elasticity. The second binder polymer may have ion conductivity. When the second binder polymer has ion conductivity, it is possible to further improve the performance of a battery. The second binder polymer may have a dielectric constant ranging from 1.0 to 100 (measured at a frequency of 1 kHz), or from 10 to 100. When the second binder polymer has the above-defined range of dielectric constant, it is possible to improve the salt dissociation degree in an electrolyte.

According to an embodiment of the present disclosure, the second binder polymer may include poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

According to an embodiment of the present disclosure, the porous adhesive layer 30' may have a pattern including at least one adhesive region containing the second binder polymer, and at least one non-coated region where no adhesive region is formed. The pattern may have a dot-like, stripe-like, diagonal, waved, triangular, quadrangular or semicircular shape. When the porous adhesive layer has such a pattern, the separator is improved in terms of resistance, and the non-coated region having no porous adhesive layer allows wetting with an electrolyte to provide the separator with improved electrolyte wettability.

According to an embodiment of the present disclosure, the porous adhesive layer 30' may have a thickness of 0.5-1.5 $\mu$m, 0.6-1.2 $\mu$m, or 0.6-1.0 $\mu$m. When the thickness of the porous adhesive layer falls within the above-defined range, it is possible to provide excellent adhesion to an electrode, resulting in an increase in cell strength of a battery. In addition, such a thickness is favorable in terms of the cycle characteristics and resistance characteristics of a battery.

Since the crosslinked structure-containing separator for a lithium secondary battery according to an embodiment of the present disclosure includes the crosslinked structure-containing polyolefin porous support according to an embodiment of the present disclosure, it has a shutdown temperature of 145°C or less, causes no rupture after being exposed at 180°C for 1 minute, and shows a ratio of the puncture strength after being exposed at 180°C for 1 minute based on the puncture strength at 25°C of 50-100%.

Since the crosslinked structure-containing separator for a lithium secondary battery according to an embodiment of the present disclosure has a shutdown temperature of 145°C or less, it is possible to ensure safety under the situation of overcharge, or the like. In addition, even after the crosslinked structure-containing separator for a lithium secondary battery is exposed at 180°C for 1 minute, it causes no rupture. In other words, the separator has improved safety, and thus can retain its shape even after being exposed at 180°C for 1 minute. Therefore, the crosslinked structure-containing separator for a lithium secondary battery according to an embodiment of the present disclosure not only can ensure safety under the situation of overcharge but also can function to insulate a positive electrode and a negative electrode from each other even at high temperature.

The shutdown temperature may be determined by fixing the separator to an air permeability tester, and measuring the temperature where the separator shows a rapid increase in air permeability upon heating. For example, the shutdown temperature may be determined by measuring a time (sec) required for 100 cc of air to pass through the separator under a constant pressure of 0.05 MPa under heating at a rate for 5°C per minute by using an air permeability tester (Model Name: EG01-55-1MR, available from Asahi Seiko Co.), and taking the temperature where the separator shows a rapid increase in air permeability as the shutdown temperature.

According to an embodiment of the present disclosure, the crosslinked structure-containing separator for a lithium secondary battery may have a shutdown temperature of 140°C or less, 133-140°C or 135-140°C. When the shutdown temperature of the separator satisfies the above-defined range, it is possible to ensure overcharge safety and to prevent the pores of the crosslinked structure-containing polyolefin porous support from being damaged during a high-temperature/pressurization step. For example, in the crosslinked structure-containing polyolefin porous support, a photoinitiator and a polymer chain are not interconnected to each other directly, or photoinitiators are not interconnected among themselves, and thus it is possible to prevent the problem of an excessive decrease in shutdown temperature caused by a drop in melting point of the polymer chains.

Whether separator is ruptured or not after being exposed at 180°C for 1 minute may be determined by forming a frame having a size of width 20 cm x length 20 cm, fixing the separator thereto by using a heat resistant tape, introducing the frame to a hot oven set to 180°C, allowing the frame to stand for 1 minute, and determining whether the separator is ruptured or not by the naked eyes.

Even though conventional separators for a lithium secondary battery have improved heat resistance and cause no rupture after being exposed at 180°C for 1 minute, they are damaged during the heat treatment step at 180°C and cannot have strength sufficient for functioning as separators.

In the crosslinked structure-containing separator for a lithium secondary battery according to an embodiment of the present disclosure, crosslinking occurs between the polymer chains to such a level that shrinking of the separator or main chain scission of polyolefin does not occur. Therefore, the crosslinked structure-containing separator for a lithium secondary battery shows a ratio of the puncture strength after being exposed at 180°C for 1 minute based on the puncture strength at 25°C of 50-100%. As a result, the separator has sufficient mechanical strength even after being exposed at a high temperature of 180°C, and thus can function sufficiently as a separator capable of preventing a short-circuit between a positive electrode and a negative electrode.

Reference will be made to the above description about the method for determining the puncture strength at 25°C and the puncture after being exposed at 180°C for 1 minute.

According to an embodiment of the present disclosure, the crosslinked structure-containing separator for a lithium secondary battery shows a ratio of the puncture strength after being exposed at 180°C for 1 minute based on the puncture strength at 25°C of 50-80%, 50-55%, 50-54.9%, or 51.8-54.9%. When the crosslinked structure-containing separator for a lithium secondary battery satisfies the above-defined ratio of the puncture strength after being exposed at 180°C for 1 minute based on the puncture strength at 25°C, it has sufficient mechanical strength even after being exposed at a high temperature of 180°C, and thus can function sufficiently as a separator capable of preventing a short-circuit between a positive electrode and a negative electrode.

According to an embodiment of the present disclosure, the crosslinked structure-containing separator for a lithium secondary battery may have a puncture strength of 50 gf or more, 100 gf or more, 100-700 gf, 150-500 gf, 200-300 gf, or 210-225 gf, after being exposed at 180°C for 1 minute. When the crosslinked structure-containing separator for a lithium secondary battery satisfies the above-defined range of the puncture strength after being exposed at 180°C for 1 minute, it has sufficient mechanical strength even at a high temperature of 180°C, and thus can function sufficiently as a separator capable of preventing a short-circuit between a positive electrode and a negative electrode.

According to an embodiment of the present disclosure, the crosslinked structure-containing separator for a lithium secondary battery may have a tensile strength in each of the machine direction and the transverse direction of $500 \ kgf/cm^2$ or more, $700 \ kgf/cm^2$ or more, $700-1500 \ kgf/cm^2$, or $780-1335 \ kgf/cm^2$, after being exposed at 180°C for 1 minute. When the crosslinked structure-containing separator for a lithium secondary battery satisfies the above-defined range of the tensile strength after being exposed at 180°C for 1 minute, it has sufficient mechanical strength even at a high temperature of 180°C, and thus can function sufficiently as a separator capable of preventing a short-circuit between a positive electrode and a negative electrode.

Reference will be made to the above description about the method for determining the tensile strength after being exposed at 180°C for 1 minute.

The crosslinked structure-containing separator for a lithium secondary battery according to an embodiment of the present disclosure may have an increased meltdown temperature as compared to a separator including a non-crosslinked polyolefin porous support. According to an embodiment of the present disclosure, the crosslinked structure-containing separator for a lithium secondary battery may have a meltdown temperature of 160°C or higher, 170°C or higher, or 180-230°C. When the crosslinked structure-containing separator for a lithium secondary battery has the above-defined range of meltdown temperature, it may cause no rupture after being exposed at 180°C for 1 minute.

The meltdown temperature may be determined through thermomechanical analysis (TMA). For example, a sample is taken in each of the machine direction and the transverse direction, and then the sample having a size of width 4.8 mm x length 8 mm is introduced to a TMA instrument (Q400, available from TA Instrument). Then, while a tension of 0.01 N is applied to the sample, the sample is heated to a temperature from 30°C to 220°C at a heating rate of 5°C/min, and the temperature where the sample undergoes a rapid increase in length and the sample is broken may be determined as the meltdown temperature.

As used herein, the term 'separator including a non-crosslinked polyolefin porous support' refers to: a separator including a non-crosslinked and crosslinked structure-free polyolefin porous support; a separator including a non-crosslinked and crosslinked structure-free polyolefin porous support, and an inorganic composite porous layer disposed on at least one surface of the crosslinked structure-free polyolefin porous support, and containing an inorganic filler and a binder polymer; or a separator including a non-crosslinked and crosslinked structure-free polyolefin porous support, an inorganic composite porous layer disposed on at least one surface of the crosslinked structure-free polyolefin porous support and containing an inorganic filler and a first binder polymer, and a porous adhesive layer disposed on the inorganic composite porous layer and containing a second binder polymer.

The crosslinked structure-containing separator for a lithium secondary battery according to an embodiment of the present disclosure may not undergo significant degradation of air permeability, weight per unit area, tensile strength at 25°C, tensile elongation at 25°C, puncture strength at 25°C, electrical resistance, or the like, as compared to the air permeability, weight per unit area, tensile strength at 25°C, tensile elongation at 25°C, puncture strength at 25°C, electrical resistance, or the like, of the separator for a lithium secondary battery before crosslinking, and also shows a small change in those properties.

The crosslinked structure-containing separator for a lithium secondary battery according to an embodiment of the present disclosure may show a change in air permeability of 10% or less, 0-10%, 0-5%, or 0-3%, as compared to the separator for a lithium secondary battery before crosslinking.

The change in air permeability may be calculated according to the following formula:

$$\text{Change (\%) in air permeability} = [(\text{Air permeability of crosslinked structure-containing separator for lithium secondary battery after crosslinking}) - (\text{Air permeability of separator for lithium secondary battery before crosslinking})] / (\text{Air permeability of separator for lithium secondary battery before crosslinking}) \times 100$$

As used herein, the term 'crosslinked structure-containing separator for a lithium secondary battery after crosslinking' refers to: a separator including a crosslinked structure-containing polyolefin porous support; a separator including a crosslinked structure-containing polyolefin porous support, and an inorganic composite porous layer disposed on at least one surface of the crosslinked structure-containing polyolefin porous support and containing an inorganic filler and a binder polymer; or a separator including a crosslinked structure-containing polyolefin porous support, an inorganic composite porous layer disposed on at least one surface of the crosslinked structure-containing polyolefin porous support and containing an inorganic filler and a first binder polymer, and a porous adhesive layer disposed on the top surface of the inorganic composite porous layer and containing a second binder polymer.

The air permeability (Gurley) may be determined according to ASTM D726-94. Herein, Gurley refers to resistance against air flow and is determined by a Gurley densometer. The air permeability value described herein is expressed by the time (seconds), i.e. air permeation time, required for 100 cc or air to pass through a section of porous support sample having an area of 1 in$^2$ under a pressure of 12.2 in H$_2$O.

The crosslinked structure-containing separator for a lithium secondary battery according to an embodiment of the present disclosure may show a change in weight per unit area of 5% or less, or 0-5%, as compared to the separator for a lithium secondary battery before crosslinking.

The change in weight per unit area may be calculated according to the following formula:

Change (%) in weight per unit area = [(Weight per unit area of crosslinked structure-containing separator for lithium secondary battery after crosslinking) - (Weight per unit area of separator for lithium secondary battery before crosslinking)] / (Weight per unit area of separator for lithium secondary battery before crosslinking) X 100

The weight per unit area $(g/m^2)$ is determined by preparing a sample having a width of 1 m and a length of 1 m and measuring the weight of the sample.

The crosslinked structure-containing separator for a lithium secondary battery according to an embodiment of the present disclosure shows a change in tensile strength at 25°C of 20% or less, 0-20%, 0-10%, 0-9%, 0-8%, or 0-7.53%, in each of the machine direction and the transverse direction, as compared to the separator a lithium secondary battery before crosslinking.

The change in tensile strength at 25°C may be calculated according to the following formula:

Change (%) in tensile strength at 25°C in machine direction = [(Tensile strength at 25°C in machine direction of separator for lithium secondary battery before crosslinking) - (Tensile strength at 25°C in machine direction of crosslinked structure-containing separator for lithium secondary battery after crosslinking)] / (Tensile strength at 25°C in machine direction of separator for lithium secondary battery before crosslinking) X 100

Change (%) in tensile strength at 25°C in transverse direction = [(Tensile strength at 25°C in transverse direction of separator for lithium secondary battery before crosslinking) - (Tensile strength at 25°C in transverse direction of crosslinked structure-containing separator for lithium secondary battery after crosslinking)] / (Tensile strength at 25°C in transverse direction of separator for lithium secondary battery before crosslinking) X 100

The tensile strength at 25°C refers to the strength of a specimen at the point of breaking, when the specimen is drawn at 25°C in each of the machine direction and the transverse direction at a rate of 50 mm/min by using Universal Testing Systems (Instron® 3345) according to ASTM D882.

The crosslinked structure-containing separator for a lithium secondary battery according to an embodiment of the present disclosure may show a change in tensile elongation at 25°C of 20% or less, or 0-20% in each of the machine direction and the transverse direction, as compared to the separator for a lithium secondary battery before crosslinking.

The change in tensile elongation at 25°C may be calculated according to the following formula:

Change (%) in tensile elongation at 25°C in machine direction = [(Tensile elongation at 25°C in machine direction of separator for lithium secondary battery before crosslinking) - (Tensile elongation at 25°C in machine direction of crosslinked structure-containing separator for lithium secondary battery after crosslinking)] / (Tensile elongation at 25°C in machine direction of separator for lithium secondary battery before crosslinking) X 100

Change (%) in tensile elongation at 25°C in transverse direction = [(Tensile elongation at 25°C in transverse direction of separator for lithium secondary battery before crosslinking) - (Tensile elongation at 25°C in transverse direction of crosslinked structure-containing separator for lithium secondary battery after crosslinking)] / (Tensile elongation at 25°C in transverse direction of separator for lithium secondary battery before crosslinking) X 100

The tensile elongation at 25°C can be calculated according to the following formula, after the specimen is drawn at 25°C in each of the machine direction and the transverse direction at a rate of 50 mm/min by using Universal Testing Systems (Instron® 3345) according to ASTM D882, and the maximum length of the specimen elongated until the specimen is broken is measured.

Tensile elongation (%) at 25°C in machine direction = (Length of specimen at 25°C in machine direction right before breaking – Length of specimen at 25°C in machine direction before elongation) / (Length of specimen at 25°C in machine direction before elongation) X 100

Tensile elongation (%) at 25°C in transverse direction = (Length of specimen at 25°C in transverse direction right before breaking – Length of specimen at 25°C in transverse direction before elongation) / (Length of specimen at 25°C in transverse direction before elongation) X 100

The crosslinked structure-containing separator for a lithium secondary battery according to an embodiment of the present disclosure may show a change in puncture strength at 25°C of 10% or less, 0.5-10%, 1-9%, or 1.18-8.71%, as compared to the separator a lithium secondary battery before crosslinking.

Herein, the change in puncture strength at 25°C may be calculated according to the following formula.

$$\text{Change (\%) in puncture strength at } 25°C = [(\text{Puncture strength of separator for lithium secondary battery before crosslinking at } 25°C) - (\text{Puncture strength of crosslinked structure-containing separator for lithium secondary battery after crosslinking at } 25°C)] / (\text{Puncture strength of separator for lithium secondary battery before crosslinking at } 25°C) \times 100$$

Reference will be made to the above description about the method for determining the puncture strength.

The crosslinked structure-containing separator for a lithium secondary battery according to an embodiment of the present disclosure may show a change in electrical resistance of 15% or less, 2-10%, or 2-5%, as compared to the separator a lithium secondary battery before crosslinking.

Herein, the change in electrical resistance may be calculated according to the following formula.

$$\text{Change (\%) in electrical resistance} = [(\text{Electrical resistance of crosslinked structure-containing separator for lithium secondary battery after crosslinking}) - (\text{Electrical resistance of separator for lithium secondary battery before crosslinking})] / (\text{Electrical resistance of separator for lithium secondary battery before crosslinking}) \times 100$$

The electrical resistance may be determined by allowing a coin cell manufactured by using a separator sample to stand at room temperature for 1 day and measuring the resistance of the separator through impedance analysis.

The crosslinked structure-containing separator for lithium secondary battery according to the present disclosure may be obtained by the following method, but is not limited thereto.

In another aspect of the present disclosure, there is provided a method for manufacturing a crosslinked structure-containing separator for a lithium secondary battery, including the steps of:

preparing a polyolefin porous support including a photoinitiator; and
irradiating ultraviolet rays to the polyolefin porous support,
wherein the content of the photoinitiator is 0.015-0.36 parts by weight based on 100 parts by weight of the polyolefin porous support.

Hereinafter, the method for manufacturing a crosslinked structure-containing separator for a lithium secondary battery according to an embodiment of the present disclosure will be explained with reference to the main parts thereof.

First, prepared is a polyolefin porous support including a photoinitiator. The photoinitiator is introduced to the surface of the polyolefin porous support, and the polyolefin porous support may be crosslinked upon the irradiation with UV rays. Herein, the term 'surface of a polyolefin porous support' may include not only the outermost surface of the polyolefin porous support but also the surfaces of the pores present inside of the polyolefin porous support.

The photoinitiator performs direct photo-crosslinking of the polymer chains in the polyolefin porous support. The photoinitiator alone may perform the crosslinking of the polyolefin support with no aid of another crosslinking agent, co-initiator or a synergist. The photoinitiator is converted into a reactive compound, while hydrogen atoms are removed through hydrogen abstraction merely by light absorption. Then, the photoinitiator forms radicals in the polymer chains in the polyolefin porous support, and makes the polymer chains reactive, thereby allowing the polymer chains to be interconnected directly with one another to perform photo-crosslinking. For example, hydrogen may be abstracted by the photoinitiator from a small amount of double bond structures or branch structures present in the polyolefin, and thus hydrogen atoms may be removed from the polyolefin chains through hydrogen abstraction merely based on light absorption, thereby forming radicals.

The method for manufacturing a crosslinked structure-containing separator for a lithium secondary battery according to an embodiment of the present disclosure uses the photoinitiator to generate radicals in the polymer chains in the polyolefin porous support, thereby forming a crosslinked structure in which the polymer chains are interconnected directly with one another.

According to an embodiment of the present disclosure, the photoinitiator may include a Type 2 photoinitiator.

According to an embodiment of the present disclosure, the Type 2 photoinitiator may include thioxanthone (TX), a thioxanthone derivative, benzophenone (BPO), a benzophenone derivative, or two or more of them.

Particular examples of the thioxanthone derivative may include, but are not limited to: 2-isopropylthioxanthone, 2-chlorothioxanthone, 2-dodecylthioxanthone, 2,4-diethylthioxanthone, 2,4-dimethylthioxanthone, 1-methoxycarbonylthioxanthone, 2-ethoxycarbonylthioxanthone, 3 -(2-methoxyethoxycarbonyl)-thioxanthone, 4-butoxycarbonyl-thioxanthone, 3-butoxycarbonyl-7-methylthioxanthone, 1-cyano-3-chlorothioxanthone, 1-ethoxycarbonyl-3-chlorothioxanthone, 1-ethoxycarbonyl-3-ethoxythioxanthone, 1-ethoxycarbonyl-3-aminothioxanthone, 1-ethoxycarbonyl-3-phenylsulfurylthioxanthone, 3,4-di[2-(2-methoxyethyoxy)ethoxycarbonyl]thioxanthone, 1-ethoxycarbonyl-3-(1-methyl-1-morpholinoethyl)-thioxanthone, 2-methyl-6-dimethoxymethyl-thioxanthone, 2-methyl-6-(1,1-dimethoxy-benzyl)-thioxanthone, 2-morpholinomethylthioxanthone, 2-methyl-6-morpholinomethyl-thioxanthone, N-allylthioxanthone-3,4-dicarboximide, N-octylthioxanthone-3,4-dicarboximide, N-(1,1,3,3-tetramethylbutyl)-thioxanthone-3,4,-dicarboximide, 1-phenoxythioxanthone, 6-ethoxycarbonyl-2-methoxythioxanthone, 6-ethoxycarbonyl-2-methylthioxanthone, thioxanthone-2-polyethylene glycol ester, 2-hydroxy-3-(3,4-dimethyl-9-oxo-9H-thioxanthone-2-yloxy)-N,N,N-trimethyl-1-propanaminium chloride, or the like.

Particular examples of the benzophenone derivative may include, but are not limited to: 4-phenylbenzophenone, 4-methoxybenzophenone, 4,4'-dimethoxybenzophenone, 4,4'-dimethylbenzophenone, 4,4'-dichlorobenzophenone, 4,4'-dimethylaminobenzophenone, 4,4'-diethylaminobenzophenone, 4-methylbenzophenone, 2,4,6-trimethylbenzophenone, 4-(4-methylthiophenyl)-benzophenone, 3,3'-dimethyl-4-methoxy-benzophenone, methyl-2-benzoyl benzoate, 4-(2-hydroxyethylthio)-benzophenone, 4-(4-tolylthio)benzophenone, 4-benzoyl-N,N,N-trimethylbenzenemethanaminium chloride, 2-hydroxy-3-(4-benzoylphenoxy)-N,N,N-trimethyl-propanaminium chloride monohydrate, 4-hydroxybenzophenone, 4-(13-acryloyl-1,4,7,10,13-pentaoxatridecyl)-benzophenone, 4-benzoyl-N,N-dimethyl-N-[2-(1-oxo-2-propenyl)oxy]ethyl-benzenemethaneminium chloride, or the like.

Particularly, when the photoinitiator includes 2-isopropyl thioxanthone, thioxanthone or a mixture thereof, the polyolefin porous support may be photo-crosslinked even with a lower light dose (e.g. 500 mJ/cm$^2$) as compared to the photo-crosslinking using benzophenone, which is favorable in terms of mass production.

In addition, when the photoinitiator includes 2-isopropyl thioxanthone (ITX), ITX has a low melting point of about 70-80°C, and thus is molten on the surface of the polyolefin porous support at a photo-crosslinking temperature controlled to 80-100°C to generate mobility of ITX into the polyolefin porous support, resulting in an increase in crosslinking efficiency. Further, it is possible to easily prevent a change in physical properties of the finished separator.

According to an embodiment of the present disclosure, the content of the photoinitiator may be 0.015-0.36 parts by weight, based on 100 parts by weight of the polyolefin porous support. When the content of the photoinitiator satisfies the above-defined range, it is possible to prevent excessive crosslinking, while allowing crosslinking of the polyolefin porous support. In this manner, the finished separator may cause no rupture after being exposed at 180°C for 1 minute, may have a shutdown temperature of 145°C or less, and may show a ratio of the puncture strength after being exposed at 180°C for 1 minute based on the puncture strength at 25°C of 50-100%. Even though the photoinitiator is used in the above-defined range, the polyolefin porous support may be crosslinked by irradiating UV rays at a light dose (i.e. lower light dose as compared to the related art) capable of ensuring mass productivity.

The content of the photoinitiator based on 100 parts by weight of the polyolefin porous support, may be determined by measuring the content of the photoinitiator with which the total volume of the polyolefin porous support is filled. For example, assuming the total pore volume of the polyolefin porous support is filled with the solvent described hereinafter to 100% and no solvent is present on the surface of the polyolefin porous support, the weight of the solvent contained in the total pore volume of the polyolefin porous support may be calculated from the density of the solvent, and the content of the photoinitiator based on 100 parts by weight of the polyolefin porous support may be calculated from the content of the photoinitiator contained in the solvent.

According to the present disclosure, since the content of the photoinitiator satisfies the above-defined range, crosslinking occurs merely between the polymer chains from which radicals are formed, and the photoinitiator merely function to form radicals in the polymer chains, and may not be crosslinked with the polymer chains.

In addition, when radicals are formed excessively, the radicals may cause main chain scission of the polyolefin and degradation of physical properties, such as mechanical strength, of the crosslinked structure-containing polyolefin porous support.

According to the present disclosure, since the content of the photoinitiator satisfies the above-defined range, it is possible to prevent excessive main chain scission of the polyolefin, caused by radicals, and degradation of the mechanical strength of the crosslinked structure-containing polyolefin porous support, while allowing crosslinking of the polyolefin porous support. In this manner, the crosslinked structure-containing separator for a lithium secondary battery according to an embodiment of the present disclosure causes no rupture after being exposed at 180°C for 1 minute, and shows a ratio of the puncture strength after being exposed at 180°C for 1 minute based on the puncture strength at 25°C of 50-100% at the same time.

When the content of the photoinitiator is less than 0.015 parts by weight based on 100 parts by weight of the polyolefin porous support, crosslinking of the polyolefin porous support is not performed smoothly even when irradiating UV rays thereto.

When the content of the photoinitiator is larger than 0.36 parts by weight based on 100 parts by weight of the polyolefin porous support, shrinking of the separator or main chain scission of the polyolefin occurs due to rapid crosslinking, and thus it is not possible to satisfy a ratio of the puncture strength after being exposed at 180°C for 1 minute based on the puncture strength at 25°C of 50-100%.

According to an embodiment of the present disclosure, the content of the photoinitiator may be 0.015-0.36 parts by weight, 0.015-0.09 parts by weight, 0.03-0.07 parts by weight, or 0.036-0.073 parts by weight, based on 100 parts by weight of the polyolefin porous support. When the content of the photoinitiator satisfies the above-defined range, it is possible to prevent excessive crosslinking, while allowing crosslinking of the polyolefin porous support. In this manner, the separator may show a ratio of the puncture strength after being exposed at 180°C for 1 minute based on the puncture strength at 25°C of 50-100%.

The polyolefin porous support may be obtained from the above-described polyolefin materials by forming pores through a conventional process known to those skilled in the art as a process for ensuring high air permeability and porosity, for example, through a wet process using a solvent, a diluent or a pore forming agent, or a dry process using orientation.

According to an embodiment of the present disclosure, the polyolefin porous support may have a number of double bonds present in the polyolefin chains of 0.01-0.5 or 0.01-0.3 per 1000 carbon atoms, as determined by $^1$H-NMR. When the polyolefin porous support has the above-defined number of double bonds, it is possible to provide a shutdown temperature of 145°C or less and to prevent excessive crosslinking, thereby providing a ratio of the puncture strength after being exposed at 180°C for 1 minute based on the puncture strength at 25°C of 50-100%, while allowing effective crosslinking of the polyolefin porous support.

Since the crosslinking between the polymer chains does not occur at the ends of the polymer chains but occurs throughout the polyolefin chains, except the ends, the number of double bonds present in the polyolefin chains, except the ends, may affect the crosslinking of the polyolefin chains. According to an embodiment of the present disclosure, the number of double bonds present in the polyolefin chains, except the ends, of the crosslinked structure-containing polyolefin porous support may be 0.005-0.49 per 1000 carbon atoms.

According to an embodiment of the present disclosure, the number of double bonds present in the polyolefin chains may be controlled by modifying the type and purity of a catalyst used for synthesizing polyolefin, addition of a linker, or the like.

According to an embodiment of the present disclosure, the polyolefin porous support may have a BET specific surface area of 10-27 m$^2$/g, 13-25 m$^2$/g, or 15~23 m$^2$/g. When the polyolefin porous support satisfies the above range of BET specific surface area, the polyolefin porous support has an increased surface area, and thus shows increased crosslinking efficiency, even when using a small amount of photoinitiator.

The BET specific surface area of the polyolefin porous support may be determined by the BET method. Particularly, the BET specific surface area of the polyolefin porous support may be calculated from the nitrogen gas adsorption at the temperature (77K) of liquid nitrogen by using Belsorp-II mini available from Bell Japan Inc.

According to an embodiment of the present disclosure, the polyolefin porous support may further include an antioxidant. The antioxidant can control the radicals formed in the polyolefin chains, thereby controlling crosslinking between the polymer chains. The antioxidant may be oxidized instead of the polymer chains to prevent oxidation of the polyolefin chains, or may absorb radicals to control crosslinking between the polymer chains. In this manner, the antioxidant may affect the shutdown temperature and mechanical strength of the finished separator.

According to an embodiment of the present disclosure, the content of the antioxidant may be 500-20000 ppm, 1000-15000 ppm, or 2000-13000 ppm, based on the weight of the polyolefin porous support. When the content of the antioxidant satisfies the above-defined range, the antioxidant can sufficiently control excessive formation of radicals, and thus can prevent the problem of side reactions, while preventing the polyolefin porous support from surface roughening. Therefore, the finished separator may have a tensile strength of 1000 kgf/cm$^2$ or more in the machine direction, after being exposed at 180°C for 1 minute.

Such antioxidants may be classified into radical scavengers which react with the radicals formed in polyolefin to stabilize polyolefin, and peroxide decomposers which decompose the peroxide produced by the radicals into a stable form of molecule. The radical scavenger releases hydrogen, stabilizes radicals, and is converted into radicals in itself. However, the radical scavenger may remain in a stable form through the resonance effect or electron rearrangement. The peroxide decomposer may realize an enhanced effect, when being used in combination with the radical scavenger.

According to an embodiment of the present disclosure, the antioxidant may include a first antioxidant as a radical scavenger and a second antioxidant as a peroxide decomposer. The first antioxidant and the second antioxidant have different acting mechanisms. Therefore, when using the first antioxidant as a radical scavenger and the second antioxidant as a peroxide decomposer at the same time, it is possible to easily inhibit undesired radical formation through the synergic effect of the antioxidants.

The content of the first antioxidant may be the same as or different from the content of the second antioxidant.

According to an embodiment of the present disclosure, the first antioxidant may include a phenolic antioxidant, an amine-based antioxidant, or a mixture thereof.

The phenolic antioxidant may include 2,6-di-t-butyl-4-methylphenol, 4,4'-thiobis(2-t-butyl-5-methylphenol), 2,2'-thiodiethylbis-[3-(3,5-di-t-butyl-4-hydroxyphenyl) propionate], pentaerythritol-tetrakis[3-(3,5-di-t-butyl-4-hydroxyphenyl)propionate], 4,4'-thiobis(2-methyl-6-t-butylphenol), 2,2'-thiobis(6-t-butyl-4-methylphenol), octadecyl-[3-(3,5-di-t-butyl-4-hydroxyphenyl)propionate], triethylene glycol-bis-[3-(3-t-butyl-4-hydroxy-5-methylphenol)propionate], thiodiethylene bis[3-(3,5-di-t-butyl-4-hydroxyphenyl)propionate], 6,6'-di-t-butyl-2,2'-thiodi-p-cresol, 1,3,5-tris(4-t-butyl-3-hydroxy-2,6-xylyl)methyl-1,3,5-triazine-2,4,6-(1H,3H,5H)-trione, dioctadecyl 3,3'-thiodipropionate, or two or more of them.

According to an embodiment of the present disclosure, the content of the first antioxidant may be 500-10000 ppm, 1000-12000 ppm, or 1000-10000 ppm, based on the weight of the polyolefin porous support. When the content of the first antioxidant satisfies the above-defined range, it is possible to easily prevent the problem of side reactions caused by excessive formation of radicals.

According to an embodiment of the present disclosure, the second antioxidant may include a phosphorus-based antioxidant, a sulfur-based antioxidant, or a mixture thereof.

The phosphorus-based antioxidant decomposes peroxide to form alcohol and is converted into phosphate. The phosphorus-based antioxidant may include 3,9-bis(2,6-dit-butyl-4-methylphenoxy)-2,4,8,10-tetraoxa-3,9-diphosphaspiro[5,5]undecane, bis(2,6-dicumylphenyl)pentaerythritol diphosphite, 2,2'-methylene bis(4,6-d-t-butylphenyl) 2-ethylhexyl phosphite, bis(2,4-di-t-butyl-6-methylphenyl)-ethyl-phosphite, bis(2,6-di-t-butyl-4-methylphenyl)pentaerythritol diphosphite, bis(2,4-di-t-butylphenyl)pentaerythritol diphosphite, bis(2,4-dicumylphenyl)pentaerythritol diphosphite, distearyl pentaerythritol diphosphite, tris(2,4-di-t-butylphenyl)phosphite, or two or more of them.

The sulfur-based antioxidant may include 3,3'-thiobis-1,1'-didocecyl ester, dimethyl 3,3'-thiodipropionate, dioctadecyl 3,3'-thiodipripionate, 2,2-bis{ [3-(dodecylthio)-1-oxopropoxy]methyl}propane-1,3-diyl bis[3-(dodecylthio)propionate], or two or more of them.

According to an embodiment of the present disclosure, the content of the second antioxidant may be 500-10000 ppm, 1000-12000 ppm, or 1000-10000 ppm, based on the weight of the polyolefin porous support. When the content of the second antioxidant satisfies the above-defined range, it is possible to easily prevent the problem of side reactions caused by excessive formation of radicals.

According to an embodiment of the present disclosure, when the antioxidant includes a first antioxidant as a radical scavenger and a second antioxidant as a peroxide decomposer at the same time, the content of the first antioxidant may be 500-10000 ppm based on the weight of the polyolefin porous support, and the content of the second antioxidant may be 500-10000 ppm based on the weight of the polyolefin porous support.

According to an embodiment of the present disclosure, the step of preparing a polyolefin porous support including a photoinitiator may include adding the photoinitiator to an extruder configured to extrude the polyolefin composition to prepare a polyolefin porous support.

According to another embodiment of the present disclosure, the step of preparing a polyolefin porous support may include coating and drying a photo-crosslinking composition containing a photoinitiator and a solvent on the outer side of the polyolefin porous support.

Herein, the expression 'coating and drying on the outer side' refers to not only coating and drying the photo-crosslinking composition directly onto the surface of the polyolefin porous support but also coating and drying the photo-crosslinking composition on the surface of another layer, after forming the layer on the polyolefin porous support.

According to an embodiment of the present disclosure, the polyolefin porous support may be subjected to corona discharge treatment, before coating the photo-crosslinking composition on the polyolefin porous support. The corona discharge treatment may be carried out by applying high-frequency wave and high-voltage output generated by a predetermined driving circuit section between a predetermined discharge electrode and a processing roll provided in a corona discharge treatment machine. The surface of the polyolefin porous support is modified through the corona discharge treatment to improve the wettability of the polyolefin porous support with the photo-crosslinking composition. Therefore, it is possible to carry out crosslinking of the polyolefin porous support more efficiently, even when using the same content of the photoinitiator. The corona discharge treatment may be carried out through a roomtemperature plasma process.

According to an embodiment of the present disclosure, the solvent may include: cycloaliphatic hydrocarbon, such as cyclopentane and cyclohexane; aromatic hydrocarbon, such as toluene, xylene and ethylbenzene; ketone, such as acetone, ethyl methyl ketone, diisopropyl ketone, cyclohexanone, methylcyclohexane and ethylcyclohexane; chlorinated aliphatic hydrocarbon, such as methylene chloride, chloroform and tetrachlorocarbon; ester, such as ethyl acetate, butyl acetate, γ-butyrolactone and ε-caprolactone; acylonitrile, such as acetonitrile and propionitrile; ether, such as tetrahydrofuran and ethylene glycol diethyl ether; alcohol, such as methanol, ethanol, isopropanol, ethylene glycol and ethylene glycol monomethyl ether; amide, such as N-methyl pyrrolidone and N,N-dimethylformamide; or two or more of them.

According to an embodiment of the present disclosure, the content of the photoinitiator in the photo-crosslinking composition may be 0.015-0.3 parts by weight based on 100 parts by weight of the polyolefin porous support, as well as 0.01-0.5 parts by weight, 0.02-0.45 parts by weight, or 0.25-0.4 parts by weight based on 100 parts by weight of the solvent. When the content of the photoinitiator satisfies the above-defined range based on the weight of the solvent, it is possible to easily prevent generation of side reactions caused by excessive formation of radicals, while allowing crosslinking of the polyolefin porous support.

In addition, according to an embodiment of the present disclosure, the content of the photoinitiator in the photo-crosslinking composition may be 0.015-0.36 parts by weight based on 100 parts by weight of the polyolefin porous support, as well as 0.01-1.0 $mg/m^2$, 0.03-0.8 $mg/m^2$, or 0.06-0.7 $mg/m^2$, based on the specific surface area of the polyolefin porous support. When the content of the photoinitiator satisfies the above-defined range, it is possible to easily prevent generation of side reactions caused by excessive formation of radicals, while allowing crosslinking of the polyolefin porous support.

The content of the photoinitiator based on the specific surface area of the polyolefin porous support may be determined through NMR analysis.

According to an embodiment of the present disclosure, the photo-crosslinking composition may be a photoinitiator solution including a photoinitiator and the solvent.

Non-limiting examples of the method for coating the photoinitiator solution on the polyolefin porous support include dip coating, die coating, roll coating, comma coating, microgravure coating, doctor blade coating, reverse roll coating, Mayer bar coating, direct roll coating, or the like.

After coating the polyolefin porous support with the photoinitiator solution, the drying step may be carried out by using a known process, and may be performed in a batchwise or continuous mode by using an oven or a heating chamber in a temperature range considering the vapor pressure of the solvent used herein. The drying step is for substantially removing the solvent present in the photoinitiator solution, and is preferably carried out as rapidly as possible considering productivity, or the like. For example, the drying step may be carried out for 1 minute or less, or 30 seconds or less.

According to another embodiment of the present disclosure, the photo-crosslinking composition may be a slurry for forming an inorganic composite porous layer, including an inorganic filler, a binder polymer, a photoinitiator and the solvent.

When the photo-crosslinking composition is a slurry for forming an inorganic composite porous layer, the photoinitiator is introduced to the surface of the polyolefin porous support, while the photo-crosslinking composition is coated on the polyolefin porous support, and thus the polyolefin porous support may be crosslinked upon the irradiation with UV rays, and an inorganic composite porous layer may be formed on at least one surface of the polyolefin porous support at the same time.

When the slurry for forming an inorganic composite porous layer is used as a photo-crosslinking composition, the polyolefin porous support may be crosslinked by using a process for forming an inorganic composite porous layer, while avoiding an additional need for a system for applying the photoinitiator directly to the polyolefin porous support, such as a system for coating and drying the solution including the photoinitiator directly on the polyolefin porous support.

In addition, the slurry for forming an inorganic composite porous layer does not require any other monomer than the photoinitiator in order to crosslink the polymer chains in the polyolefin porous support directly. Therefore, even when the photoinitiator is incorporated to the slurry for forming an inorganic composite porous layer together with the inorganic filler and binder polymer, there is no monomer or other ingredients interrupting the photoinitiator from reaching the surface of the polyolefin porous support, and thus the photoinitiator can be introduced sufficiently to the surface of the polyolefin porous support.

In general, the polyolefin porous polymer support itself and the inorganic filler have a high UV-protecting effect. Thus, when UV is irradiated after forming an inorganic composite porous layer containing the inorganic filler, irradiation dose of UV rays arriving at the polyolefin porous support may be reduced. However, according to the present disclosure, the polymer chains in the polyolefin porous support may be crosslinked directly, even when UV rays are irradiated after forming the inorganic composite porous layer.

According to an embodiment of the present disclosure, when the photo-crosslinking composition is a slurry for forming an inorganic composite porous layer, the slurry may include, as a photoinitiator, 2-isopropyl thioxanthone, thioxanthone or a mixture thereof. Particularly, 2-isopropyl thioxanthone or thioxanthone allows photo-crosslinking even under a long wavelength showing a high transmission rate. Therefore, even when the photoinitiator is incorporated to the slurry for forming an inorganic composite porous layer including an inorganic filler and a binder polymer, it is possible to facilitate crosslinking of the polyolefin porous support.

The solvent may function as a solvent capable of dissolving the binder polymer, or as a dispersion medium not capable of dissolving the binder polymer but capable of dispersing the binder polymer, depending on the type of the binder polymer. In addition, the solvent can dissolve the photoinitiator. The solvent may have a solubility parameter similar to the solubility of the binder polymer to be used and a low boiling point. This is because such a solvent allows homogeneous mixing and may be removed with ease subsequently. Non-limiting examples of the solvent are the same as described above.

Reference will be made to the above description about the inorganic filler and the binder polymer.

The slurry for forming an inorganic composite porous layer may be prepared by dissolving or dispersing the binder polymer in the solvent, adding the inorganic filler thereto and dispersing it therein. The inorganic filler may be added after it is pulverized in advance to a predetermined average particle diameter. Otherwise, the inorganic filler may be added to the slurry containing the binder polymer dissolved or dispersed therein, and then pulverized and dispersed, while controlling it to have a predetermined average particle diameter by using a ball milling process, or the like. Herein, the pulverization may be carried out for 1-20 hours, and the pulverized inorganic filler may have an average particle diameter within the above-defined range. The inorganic filler may be pulverized by using a conventional method, such as ball milling.

According to an embodiment of the present disclosure, the slurry for forming an inorganic composite porous layer may have a solid content of 5-60 wt%, or 30-50 wt%. When the inorganic composite porous layer has the above-defined range of solid content, it is possible to ensure coating uniformity with ease, and to prevent generation of nonuniformity, caused by flowing of the slurry, or to prevent consumption of a lot of energy for drying the slurry.

According to an embodiment of the present disclosure, when the photo-crosslinking composition is the slurry for forming an inorganic composite porous layer, a phase separation process may be carried out after coating the photo-crosslinking composition on the polyolefin porous support. The phase separation may be carried out by humidified phase separation or dipping phase separation.

Hereinafter, humidified phase separation will be explained in more detail.

First, humidified phase separation may be carried out at a temperature of 15-70°C or 20-50°C under a relative humidity of 15-80% or 30-50%. While the slurry for forming an inorganic composite porous layer is dried, it has phase transition properties through a vapor-induced phase separation phenomenon known to those skilled in the art.

To carry out humidified phase separation, a non-solvent for the binder polymer may be introduced in a gaseous state. The non-solvent for the binder polymer is not particularly limited, as long as it cannot dissolve the binder polymer and has partial miscibility with the solvent. For example, a non-solvent providing the binder polymer with a solubility of less than 5 wt% at 25°C may be used. Particular examples of the non-solvent for the binder polymer include water, methanol, ethanol, isopropanol, butanol, ethylene glycol, propylene glycol, tripropylene glycol, or two or more of them.

Hereinafter, dipping phase separation will be explained in more detail.

After coating the slurry for forming an inorganic composite porous layer on the outside of the polyolefin porous support, the coated support is dipped in a solidifying solution containing a non-solvent for the binder polymer for a predetermined time. In this manner, the binder polymer is solidified, while phase separation occurs in the coated slurry for forming an inorganic composite porous layer. In this process, a porous inorganic composite porous layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the slurry, and is preferably carried out as rapidly as possible considering productivity, or the like. For example, the drying step may be carried out for 1 minute or less, or 30 seconds or less.

As the solidifying solution, the non-solvent for the binder polymer may be used alone, or a mixed solvent of the non-solvent for the binder polymer with the above-mentioned solvent may be used. When using a mixed solvent of the non-solvent for the binder polymer with the solvent, the content of the non-solvent for the binder polymer may be 50 wt% or more based on 100 wt% of the solidifying solution with a view to formation of a high-quality porous structure and improvement of productivity.

According to another embodiment of the present disclosure, the step of coating and drying a photo-crosslinking composition containing a photoinitiator and a solvent on the outer side of the polyolefin porous support may include:

coating a slurry for forming an inorganic composite porous layer including an inorganic filler, a first binder polymer and a dispersion medium on at least one surface of the polyolefin porous support, followed by drying, to form an inorganic composite porous layer; and
applying a coating solution for forming a porous adhesive layer including a second binder polymer, the photoinitiator and the solvent to the top surface of the inorganic composite porous layer, followed by drying.

Reference will be made to the above description about the inorganic filler and the slurry for forming an inorganic composite porous layer.

The dispersion medium may function as a solvent capable of dissolving the first binder polymer, or as a dispersion medium not capable of dissolving the first binder polymer but capable of dispersing the first binder polymer, depending on the type of the first binder polymer. The dispersion medium may have a solubility parameter similar to the solubility of the first binder polymer to be used and a low boiling point. This is because such a dispersion medium allows homogeneous mixing and may be removed with ease subsequently.

According to an embodiment of the present disclosure, the dispersion medium may be an aqueous dispersion medium. When the dispersion medium is an aqueous dispersion medium, it is eco-friendly, does not require an excessive heat quantity for forming and drying an inorganic composite porous layer, and does not need an additional explosion-preventing system, and thus can form an inorganic composite porous layer more easily.

According to an embodiment of the present disclosure, the first binder polymer may not be dissolved in the solvent and the non-solvent for the second binder polymer as described hereinafter. In this case, even when the coating solution as mentioned hereinafter is applied to form a porous adhesive layer after forming the inorganic composite layer, the first binder polymer is not dissolved, and thus it is possible to prevent the first binder polymer dissolved in the solvent and/or the non-solvent for the second binder polymer from blocking the pores with ease.

According to an embodiment of the present disclosure, the first binder polymer may be an aqueous binder polymer. Herein, the first binder polymer may be dissolved in an aqueous solvent or may be dispersed by the aqueous dispersion medium. When the first binder polymer is dispersed by the aqueous dispersion medium, the first binder polymer may be a particle-shaped binder polymer.

The slurry for forming an inorganic composite porous layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining solvent, while not adversely affecting the productivity.

Reference will be made to the above description about the second binder polymer.

The solvent may be one capable of dissolving the second binder polymer at 5 wt% or more, 15 wt% or more, or 25 wt% or more, at 25°C.

The solvent may be a non-solvent for the first binder polymer. For example, the solvent may dissolve the first binder polymer at a concentration of less than 5 wt% at 25°C.

Reference will be made to the above description about the particular types of the solvent.

According to an embodiment of the present disclosure, the second binder polymer may be used in an amount of 3-30 wt%, or 5-25 wt%, based on 100 wt% of the coating solution for forming a porous adhesive layer.

Since the photoinitiator is contained in the coating solution for forming a porous adhesive layer, the photoinitiator can be introduced to the surface of the polyolefin porous support, while forming a porous adhesive layer at the same time, when coating the coating solution for forming a porous adhesive layer on the top surface of the inorganic composite porous layer.

While applying the coating solution for forming a porous adhesive layer, the polyolefin porous support is wetted with the solvent. Herein, the photoinitiator contained in the coating solution for forming a porous adhesive layer is introduced to the polyolefin porous support, and the polyolefin porous support may be photo-crosslinked by the photoinitiator present on the surface of the polyolefin porous support, upon the UV irradiation.

In this manner, the method for manufacturing a crosslinked structure-containing separator for a lithium secondary battery according to an embodiment of the present disclosure can simplify the process in that the polyolefin porous support can be photo-crosslinked by using a step of forming a porous adhesive layer, while avoiding a need for a system for directly applying the photoinitiator to the polyolefin porous support in order to photo-crosslink the polyolefin porous support, for example, a system for directly coating and drying a solution containing the photoinitiator on the polyolefin porous support.

The method for manufacturing a crosslinked structure-containing separator for a lithium secondary battery according to an embodiment of the present disclosure does not require any other ingredient, such as a monomer for forming radicals, than the photoinitiator to perform direct crosslinking of the polymer chains in the polyolefin porous support. Thus, even though the photoinitiator is added to the coating solution for forming a porous adhesive layer, there is no ingredient interrupting the photoinitiator from reaching the surface of the polyolefin porous polymer support. As a result, the photoinitiator can be introduced sufficiently to the surface of the polyolefin porous support.

Additionally, in general, the polyolefin porous polymer support itself and the inorganic filler have a high UV-protecting effect. Thus, when UV is irradiated after forming an inorganic composite porous layer and a porous adhesive layer, irradiation dose of UV rays arriving at the polyolefin porous support may be reduced. However, according to the present disclosure, crosslinking may be accomplished even with a low UV irradiation dose, and the polymer chains in the polyolefin porous support may be crosslinked directly, even when the UV is irradiated after forming the inorganic composite porous layer and the porous adhesive layer.

According to an embodiment of the present disclosure, the coating solution for forming a porous adhesive layer may include, as a photoinitiator, 2-isopropyl thioxanthone, thioxanthone or a mixture thereof. Particularly, 2-isopropyl thioxanthone or thioxanthone allows photo-crosslinking even under a long wavelength showing a high transmission rate.

Therefore, even when UV rays are irradiated after forming the inorganic composite porous layer and porous adhesive layer, the polyolefin porous support may be crosslinked with ease.

According to an embodiment of the present disclosure, it is possible to form a pattern on the finished porous adhesive layer through the pattern coating of the coating solution for forming a porous adhesive layer on the top surface of the inorganic composite porous layer.

According to an embodiment of the present disclosure, after applying the coating solution for forming a porous adhesive layer on the top surface of the inorganic composite porous layer, phase separation may be carried out. Herein, the phase separation may be carried out by dipping phase separation.

After applying the coating solution for forming a porous adhesive layer on the top surface of the inorganic composite porous layer, the resultant product is dipped in a solidifying solution containing a non-solvent for the second binder polymer for a predetermined time to perform dipping phase separation. In this manner, the second binder polymer is solidified, while phase separation occurs in the coated solution for forming a porous adhesive layer. In this process, a porous adhesive layer is formed. Then, the resultant product is washed with water to remove the solidifying solution, followed by drying. The drying step may be carried out by using a known process, and may be performed in a batchwise or continuous mode by using an oven or a heating chamber in a temperature range considering the vapor pressure of the solvent used herein. The drying step is for substantially removing the solvent present in the coating solution for forming a porous adhesive layer, and is preferably carried out as rapidly as possible considering productivity, or the like. For example, the drying step may be carried out for 1 minute or less, or 30 seconds or less.

As the solidifying solution, the non-solvent for the second binder polymer may be used alone, or a mixed solvent of the non-solvent for the second binder polymer with the above-mentioned solvent may be used. When using a mixed solvent of the non-solvent for the second binder polymer with the solvent, the content of the non-solvent for the second binder polymer may be 50 wt% or more based on 100 wt% of the solidifying solution with a view to formation of a high-quality porous structure and improvement of productivity.

When carrying out dipping phase separation, the second binder polymer is condensed, while the second binder polymer is solidified. Thus, it is possible to prevent the second binder polymer from infiltrating to the surface and/or inner part of the polyolefin porous support, and to prevent an increase in resistance of the separator. In addition, the adhesive layer including the second binder polymer becomes a porous layer to improve the resistance of the separator.

The non-solvent for the second binder polymer may dissolve the second binder polymer at a concentration of less than 5 wt% at 25°C.

The non-solvent for the second binder polymer may also be a non-solvent for the first binder polymer. For example, the non-solvent for the second binder polymer may dissolve the first binder polymer at a concentration of less than 5 wt% at 25°C.

According to an embodiment of the present disclosure, particular examples of the non-solvent for the second binder polymer include water, methanol, ethanol, propyl alcohol, butyl alcohol, butanediol, ethylene glycol, propylene glycol, tripropylene glycol, or two or more of them.

According to an embodiment of the present disclosure, the dipping time may be 3 seconds to 1 minute. When the dipping time satisfies the above-defined range, phase separation occurs suitably to ensure the adhesion between the inorganic composite porous layer and the porous adhesive layer and to prevent interlayer separation of the adhesive layer with ease.

According to an embodiment of the present disclosure, the coating solution for forming a porous adhesive layer may be dried by a drying method used conventionally for manufacturing a separator. For example, the coated slurry may be dried by using air for 10 seconds to 30 minutes, 30 seconds to 20 minutes, or 3-10 minutes. When the drying time falls within the above-defined range, it is possible to remove the remaining dispersion medium, while not adversely affecting the productivity.

As a result, the inorganic composite porous layer and the porous adhesive layer are formed individually through a separate step in the method for manufacturing a crosslinked structure-containing separator for a lithium secondary battery according to an embodiment of the present disclosure, and thus the porous adhesive layer may be formed with various forms. For example, the porous adhesive layer may be formed as a patterned layer with ease.

After that, UV rays are irradiated to the polyolefin porous support including the photoinitiator. As UV rays are irradiated, the polymer chains in the polyolefin porous support are crosslinked to provide a crosslinked structure-containing polyolefin porous support having a structure including polymer chains interconnected directly with one another.

UV irradiation is carried out by using a UV crosslinking system, while controlling UV irradiation time and irradiation dose adequately considering the content of the photoinitiator, or the like. For example, the UV irradiation time and irradiation dose may be set under such a condition that the polyolefin chains in the polyolefin porous support may be crosslinked sufficiently to ensure a desired level of heat resistance, while preventing the polyolefin porous support from being damaged by the heat generated by the UV lamp. In addition, the UV lamp used for the UV crosslinking system may be selected suitably from a high-temperature mercury lamp, a metal lamp, a gallium lamp, or the like, depending on the photoinitiator, and the light emission wavelength and dose of the UV lamp may be selected suitably depending on the process.

The method for manufacturing a crosslinked structure-containing separator for a lithium secondary battery according to an embodiment of the present disclosure can perform photo-crosslinking of the polymer chains in the polyolefin porous support even with a significantly smaller UV irradiation light dose as compared to the light dose used for general photo-crosslinking. Therefore, it is possible to increase the applicability to a mass production process. For example, the UV light dose may be 10-2000 mJ/cm$^2$, 30-1500 mJ/cm$^2$, 50-1000 mJ/cm$^2$, or 150-500 mJ/cm$^2$.

According to an embodiment of the present disclosure, 'UV light dose' may be determined by using a portable light dose measuring instrument called H type UV bulb and UV power puck available from Miltec. When determining light dose by using H type UV bulb available from Miltec, three types of wavelength values of UVA, UVB and UVC are derived depending on wavelength, and UV rays used herein corresponds to UVA.

According to the present disclosure, the method for determining 'UV light dose' includes passing UV power puck through a conveyer in the presence of a light source under the same condition as a sample, and the UV light dose value displayed in UV power puck is defined as 'UV light dose'.

The crosslinked structure-containing separator for a lithium secondary battery as described above may be interposed between a positive electrode and a negative electrode to obtain a lithium secondary battery.

The lithium secondary battery may have various shapes, such as a cylindrical shape, a prismatic shape, a pouch-like shape, or the like.

The lithium secondary battery may include a lithium metal secondary battery, a lithium-ion secondary battery, a lithium polymer secondary battery, a lithium-ion polymer secondary battery, or the like.

The electrodes used in combination with the crosslinked structure-containing separator for a lithium secondary battery according to the present disclosure are not particularly limited, and may be obtained by allowing electrode active materials to be bound to an electrode current collector through a method generally known in the art.

Among the electrode active materials, non-limiting examples of a positive electrode active material include, but are not limited to: layered compounds, such as lithium cobalt oxide (LiCoO$_2$) and lithium nickel oxide (LiNiO$_2$), or those compounds substituted with one or more transition metals; lithium manganese oxides such as those represented by the chemical formula of Li$_{1+x}$Mn$_{2-x}$O$_4$ (wherein x is 0-0.33), LiMnO$_3$, LiMn$_2$O$_3$ and LiMnO$_2$; lithium copper oxide (Li$_2$CuO$_2$); vanadium oxides such as LiVsOs, LiV$_3$O$_4$, V$_2$O$_5$ or Cu$_2$V$_2$O$_7$; Ni-site type lithium nickel oxides represented by the chemical formula of LiNi$_{1-x}$M$_x$O$_2$ (wherein M is Co, Mn, Al, Cu, Fe, Mg, B or Ga, and x is 0.01-0.3); lithium manganese composite oxides represented by the chemical formula of LiMn$_{2-x}$M$_x$O$_2$ (wherein M is Co, Ni, Fe, Cr, Zn or Ta, and x is 0.01-0.1) or Li$_2$Mn$_3$MO$_8$ (wherein M is Fe, Co, Ni, Cu or Zn); LiMn$_2$O$_4$ in which Li is partially substituted with an alkaline earth metal ion; disulfide compounds; Fe$_2$(MoO$_4$)$_3$; or the like.

Non-limiting examples of a negative electrode active material include conventional negative electrode active materials that may be used for the negative electrodes for conventional electrochemical devices. Particularly, lithium-intercalating materials, such as lithium metal or lithium alloys, carbon, petroleum coke, activated carbon, graphite or other carbonaceous materials, are used preferably.

Non-limiting examples of a positive electrode current collector include foil made of aluminum, nickel or a combination thereof. Non-limiting examples of a negative electrode current collector include foil made of copper, gold, nickel, copper alloys or a combination thereof.

According to an embodiment of the present disclosure, the conductive material used in each of the negative electrode and the positive electrode may be added in an amount of 1-30 wt% based on the total weight of the active material layer. The conductive material is not particularly limited, as long as it causes no chemical change in the corresponding battery and has conductivity. Particular examples of the conductive material include: graphite, such as natural graphite or artificial graphite; carbon black, such as acetylene black, Ketjen black, channel black, furnace black, lamp black or thermal black; conductive fibers, such as carbon fibers or metallic fibers; fluorocarbon; metal powder, such as aluminum or nickel powder; conductive whisker, such as zinc oxide or potassium titanate; conductive metal oxide, such as titanium oxide; conductive materials, such as polyphenylene derivatives, or the like.

According to an embodiment of the present disclosure, the binder used in each of the negative electrode and the positive electrode independently is an ingredient which assists binding between an active material and a conductive material and binding to a current collector. In general, the binder may be added in an amount of 1-30 wt% based on the total weight of the active material layer. Particular examples of the binder include polyvinylidene fluoride (PVDF), polyacrylic acid (PAA), polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylenepropylene-diene terpolymer (EPDM), sulfonated EPDM, styrene-butadiene rubber, fluoro-rubber, various copolymers, or the like.

According to an embodiment of the present disclosure, the lithium secondary battery includes an electrolyte, which may include an organic solvent and a lithium salt. In addition, the electrolyte may include an organic solid electrolyte or an inorganic solid electrolyte.

Particular examples of the organic solvent include aprotic organic solvents, such as N-methyl-2-pyrrolidone, ethylene carbonate, propylene carbonate, butylene carbonate, dimethyl carbonate, diethyl carbonate, γ-butyrolactone, 1,2-dimethoxyethane, tetrahydroxy franc, 2-methyl tetrahydrofuran, dimethyl sulfoxide, 1,3-dioxolan, formamide, dimethyl formamide, dioxolan, acetonitrile, nitromethane, methyl formate, methyl acetate, triphosphate, trimethoxymethane, dioxolan derivatives, sulforane, methyl sulforane, 1,3-dimethyl-2-imidazolidione, propylene carbonate derivatives, tetrahydrofuran derivatives, ethers, methyl propionate, ethyl propionate, or the like.

The lithium salt is a material which can be dissolved in the non-aqueous electrolyte with ease, and particular examples thereof include LiCl, LiBr, LiI, $LiClO_4$, $LiBF_4$, $LiB_{10}Cl_{10}$, $LiPF_6$, $LiCF_3SO_3$, $LiCF_3CO_2$, $LiAsF_6$, $LiSbF_6$, $LiAlCl_4$, $CH_3SO_3Li$, $(CF_3SO_2)_2NLi$, lithium chloroborate, lithium lower aliphatic carboxylate, lithium tetraphenyl borate, imide, or the like.

In addition, the electrolyte may further include pyridine, triethyl phosphite, triethanolamine, cyclic ethers, ethylene diamine, n-glyme, triamide hexaphosphate, nitrobenzene derivatives, sulfur, quinone imine dyes, N-substituted oxazolidinone, N,N-substituted imidazolidine, ethylene glycol dialkyl ether, ammonium salt, pyrrole, 2-methoxyethaol and aluminum trichloride in order to improve the charge/discharge characteristics, flame resistance, or the like. Optionally, the electrolyte may further include a halogen-containing solvent, such as carbon tetrachloride or trifluoroethylene, in order to impart non-combustibility. The electrolyte may further include carbon dioxide gas in order to improve the high-temperature storage characteristics.

Particular examples of the organic solid electrolyte may include polyethylene derivatives, polyethylene oxide derivatives, polypropylene oxide derivatives, phosphate polymer, polyagitation lysine, polyester sulfide, polyvinyl alcohol, polyvinylidene fluoride, polymers containing an ionically dissociable group, or the like.

Particular examples of the inorganic solid electrolyte may include nitrides, halides and sulfates of Li, such as $Li_3N$, LiI, $Li_5NI_2$, $Li_3N$-LiI-LiOH, $LiSiO_4$, $LiSiO_4$-LiI-LiOH, $Li_2SiS_3$, $Li_4SiO_4$, $Li_4SiO_4$-LiI-LiOH and $Li_3PO_4$-$Li_2S$-$SiS_2$.

Injection of the electrolyte may be carried out in an adequate step during the process for manufacturing a battery depending on the manufacturing process of a final product and properties required for a final product. In other words, injection of the electrolyte may be carried out before the assemblage of a battery or in the final step of the assemblage of a battery.

According to an embodiment of the present disclosure, the crosslinked structure-containing separator for a secondary battery may be applied to a battery through lamination, stacking and folding of the separator with electrodes, besides a conventional process, winding.

According to an embodiment of the present disclosure, the crosslinked structure-containing separator for a secondary battery may be interposed between the positive electrode and the negative electrode. When an electrode assembly is formed by assembling a plurality of cells or electrodes, the separator may be interposed between the adjacent cells or electrodes. The electrode assembly may have various structures, such as a simple stack type, a j elly-roll type, a stacked-folded type, a laminated-stacked type, or the like.

<u>MODE FOR DISCLOSURE</u>

Examples will be described more fully hereinafter so that the present disclosure can be understood with ease. The following examples may, however, be embodied in many different forms and should not be construed as limited to the exemplary embodiments set forth therein. Rather, these exemplary embodiments are provided so that the present disclosure will be thorough and complete, and will fully convey the scope of the present disclosure to those skilled in the art.

**Example 1**

As a photoinitiator, 2-isopropyl thioxanthone (Sigma Aldrich Co.) was prepared.

As a polyolefin porous support, prepared was a polyethylene porous film (Senior Co., weight average molecular weight: 600,000, porosity: 50%) having a number of double bonds present in the polyolefin chains of 0.2 per 1000 carbon atoms, as determined by $^1$H-NMR, and having a thickness of 9 $\mu$m.

As a UV light source, a high-pressure mercury lamp (high-pressure mercury lamp available from Lichtzen, LH-250/800-A) was prepared.

The photoinitiator was dissolved in acetone as a solvent to prepare a photo-crosslinking composition including 0.05 parts by weight of the photoinitiator based on 100 parts by weight of acetone.

The prepared polyolefin porous separator was dipped in the photo-crosslinking composition for 30 seconds and taken out therefrom, while cutting the composition by using a bar so that it might not remain on the surface of the porous support and the content of the photoinitiator might be 0.0365 parts by weight based on 100 parts by weight of the polyolefin porous support, and then dried at room temperature (25°C) for 1 minute.

After that, UV rays were irradiated to the top surface of the polyolefin porous support coated with the photo-crosslinking composition to an accumulated light dose, i.e. UV irradiation dose of 500 mJ/cm$^2$. In this manner, a crosslinked structure-containing polyolefin porous support was obtained as a crosslinked structure-containing separator for a lithium secondary battery. Herein, the UV irradiation intensity was set to 80% of the UV light source, and the processing line speed was set to 10 m/min.

**Example 2**

A crosslinked structure-containing polyolefin porous support was obtained as a crosslinked structure-containing separator for a lithium secondary battery in the same manner as Example 1, except that thioxanthone (available from TCI Co.) was used instead of 2-isopropyl thioxanthone.

**Example 3**

As a polyolefin porous support, prepared was a polyethylene porous film (Senior Co., weight average molecular weight: 600,000, porosity: 50%) having a number of double bonds present in the polyolefin chains, except the ends, of 0.1 per 1000 carbon atoms, as determined by $^1$H-NMR, and having a thickness of 6.5 μm.

As an inorganic filler, prepared was $Al_2O_3$ powder having a $D_{50}$ particle diameter of 600 nm mixed with γ-AlOPO powder having a $D_{50}$ particle diameter of 250 nm at a weight ratio of 9:1. As the first binder polymer, acrylic emulsion (CSB-130, Toyo Ink Co.) was prepared. In addition, sodium carboxymethyl cellulose (CMC-Na) (SG-L02, GL Chem Co.) was prepared as a dispersant.

The prepared inorganic filler, the first binder polymer and the dispersant were added to water at a weight ratio of 97:2: 1, and the inorganic filler was pulverized and dispersed to prepare a slurry for forming an inorganic composite porous layer.

The slurry for forming an inorganic composite porous layer was coated and dried on both surfaces of the polyolefin porous support to form inorganic composite porous layers.

Poly(vinylidene fluoride-hexafluoropropylene) (PVDF-HFP) (LBG, Arkema Co.) as the second binder polymer was added to N-methyl-2-pyrrolidone (NMP) as a solvent, and 2-isopropyl thioxanthone (Sigma Aldrich Co.) as a photoinitiator was added in an amount of 0.1 parts by weight based on 100 parts by weight of N-methyl-2-pyrrolidone to prepare a coating solution for forming a porous adhesive layer.

The coating solution for forming a porous adhesive layer was coated on the inorganic composite porous layer in such a manner that the content of the photoinitiator might be 0.07 parts by weight based on 100 parts by weight of the polyolefin porous support, and then the resultant structure was dipped in a solidifying bath and a water-washing bath sequentially to solidify the coating solution for forming a porous adhesive layer. The solidifying bath includes water as a non-solvent, and the water-washing bath includes a rinse solution including water alone as a non-solvent. After the coating solution for forming a porous adhesive layer was solidified, the solvent and the non-solvent remaining in the coating solution were dried at the same time.

After that, a high-pressure mercury lamp (Lichtzen high-pressure mercury lamp, LH-250/800-A) was irradiated to the resultant structure, and UV rays were irradiated at an accumulated light dose of 500 mJ/cm$^2$ so that the polyolefin porous support might be crosslinked. In this manner, a crosslinked structure-containing separator for a lithium secondary battery was obtained.

**Comparative Example 1**

A polyethylene porous film (Senior Co., weight average molecular weight: 600,000, porosity: 50%) having a number of double bonds present in the polyolefin chains, except the ends, of 0.2 per 1000 carbon atoms, as determined by $^1$H-NMR, and having a thickness of 9.6 μm was used as a separator for a lithium secondary battery without any further treatment.

**Comparative Example 2**

A polypropylene porous film (Senior Co., porosity: 45%) having a thickness of 14.0 μm was used as a separator for a lithium secondary battery without any further treatment.

**Comparative Example 3**

A polyimide porous film (Guhyun Co., porosity: 45%) having a thickness of 16.3 μm was used as a separator for a lithium secondary battery without any further treatment.

**Comparative Example 4**

A crosslinked structure-containing separator for a lithium secondary battery was obtained in the same manner as Example 1, except that a photo-crosslinking composition including 1.0 parts by weight of the photoinitiator based on 100 parts by weight of acetone was used, and the polyolefin porous separator was dipped in the photo-crosslinking composition for 30 seconds and taken out therefrom, while cutting the composition by using a bar so that it might not remain on the surface of the porous support and the content of the photoinitiator might be 0.7 parts by weight based on 100 parts by weight of the polyolefin porous support.

**Comparative Example 5**

A crosslinked structure-containing separator for a lithium secondary battery was obtained in the same manner as Example 3, except that 2-isopropyl thioxanthone was not used.

**Test Example: Determination of Physical Properties of Separators**

Each of the separators according to Examples 1-3 and Comparative Examples 1-5 was determined in terms of air permeability, porosity, electrical resistance, meltdown temperature, shutdown temperature, tensile strength at 25°C, puncture strength at 25°C, tensile strength after allowing the separator to stand at 180°C for 1 minute, and puncture strength after allowing the separator to stand at 180°C for 1 minute. The results are shown in the following Table 1.

(1) Evaluation of Air Permeability

Air permeability (Gurley) was determined according to the method of ASTM D726-94. Gurley used herein refers to the resistance of a separator against air flow and was determined by using Gurley densometer. The air permeability value defined herein is expressed by the time (second), i.e. air permeation time, required for 100 mL of air to pass through the section of 1 in$^2$ of a separator under a pressure of 12.2 in $H_2O$.

(2) Evaluation of Porosity

The porosity was calculated by measuring the width, length and thickness of each separator to obtain the volume, measuring the weight of each separator and calculating the ratio of the weight of the separator based on the weight expressed from the volume occupied by the separator to 100%.

$$\text{Porosity } (\%) = 100 \times (1 - \text{weight of separator sample} / (\text{width } (50 \text{ mm}) \times \text{length } (50 \text{ mm}) \times \text{thickness of separator sample} \times \text{density of separator}))$$

(3) Evaluation of Electrical Resistance

The electrical resistance was determined by fabricating a coin cell by using each of the separators according to Examples 1-3 and Comparative Examples 1-5, allowing the coin cell to stand at room temperature for 1 day, and the resistance of the separator was measured by impedance analysis. The coin cell was fabricated as follows.

Manufacture of Negative Electrode

Artificial graphite as a negative electrode material, denka black as a conductive material and polyvinylidene fluoride (PVDF) as a binder were mixed at a weight ratio of 75:5:20, and N-methyl pyrrolidone (NMP) as a solvent was added thereto to prepare a negative electrode slurry.
The negative electrode slurry was coated on a copper current collector at a loading amount of 3.8 mAh/cm$^2$, followed by drying, to obtain a negative electrode.

Manufacture of Positive Electrode

LiCoO$_2$ as a positive electrode active material, denka black as a conductive material and polyvinylidene fluoride (PVDF) as a binder were added N-methyl pyrrolidone (NMP) as a solvent at a weight ratio of 85:5:10 to prepare a positive electrode active material slurry. The positive electrode active material slurry was coated on a sheet-like aluminum current collector, followed by drying, to form a positive electrode active material layer with a final positive electrode loading amount of 3.3 mAh/cm$^2$.

Manufacture of Coin Cell

The separator according to each of Examples and Comparative Examples was interposed between the negative electrode and the positive electrode obtained as described above, and a non-aqueous electrolyte (1 M LiPF$_6$, ethylene carbonate (EC)/propylene carbonate (PC)/diethyl carbonate (DEC), volume ratio 3:3:4) was injected thereto to obtain a coin cell.

(4) Evaluation of Meltdown Temperature

The meltdown temperature was determined by taking a sample from each separator in the machine direction (MD) and analyzing each sample through thermomechanical analysis (TMA). Particularly, a sample having a size of width x length of 4.5 mm x 8 mm was introduced to a TMA instrument (TA Instrument, Q400) and warmed from a temperature of 30°C to 220°C at a heating rate of 5°C/min, while applying a tension of 0.01 N thereto. As the temperature was increased, the sample showed a change in length. Then, the temperature at which point the sample was broken after a rapid increase in length was measured.

(5) Evaluation of Shutdown Temperature

After fixing the separator to an air permeability tester, the shutdown temperature was determined by measuring air permeability under heating at a rate for 5°C per minute. Herein, the air permeability was determined by measuring a time (sec) required for 100 mL of air to pass through the separator under a constant pressure of 0.05 MPa by using an air permeability tester (Model Name: EG01-55-1MR, available from Asahi Seiko Co.). Herein, the temperature where the separator shows a rapid increase in air permeability was taken as the shutdown temperature.

(6) Tensile Strength at 25°C in Machine Direction and Transverse Direction

A specimen having a size of 100 mm x 15 mm was prepared.
The tensile strength was defined as the strength of the specimen at the point of breaking, when the specimen was drawn at 25°C in each of the machine direction and the transverse direction at a rate of 50 mm/min by using Universal Testing Systems (Instron® 3345) according to ASTM D882.

(7) Evaluation of Puncture Strength at 25°C

A specimen having a size of 50 mm x 50 mm was prepared.
According to ASTM D2582, a round tip having a diameter of 1 mm was allowed to operate at a rate of 120 mm/min, and puncture strength was determined at 25°C.

(8) Evaluation of Tensile Strength in Machine Direction and Transverse Direction after Standing at 180°C for 1 Minute

A specimen having a size of 100 mm x 15 mm was prepared.
After exposing the specimen at 180°C for 1 minute, the tensile strength was determined as the strength of the specimen at the point of breaking, when the specimen was drawn at 25°C in each of the machine direction and the transverse direction at a rate of 50 mm/min by using Universal Testing Systems (Instron® 3345) according to ASTM D882.

(9) Evaluation of Puncture Strength after Standing at 180°C for 1 Minute

A specimen having a size of 50 mm x 50 mm was prepared.
After exposing the specimen at 180°C for 1 minute, a round tip having a diameter of 1 mm was allowed to operate at a rate of 120 mm/min, and puncture strength was determined at 25°C, according to ASTM D2582.

(10) Evaluation of Rupture of Separator after Standing at 180°C for 1 Minute

A frame having a size of width 20 cm x length 20 cm was fabricated, and each separator was fixed thereto by using a heat resistant tape. Then, the frame was introduced to a hot oven set to 180°C and allowed to stand therein for 1 minute. After that, whether the separator was ruptured or not was determined by the naked eyes.

[Table 1]

| | | Ex. 1 | Ex.2 | Ex. 3 | Comp. Ex. 1 | Comp. Ex. 2 | Comp. Ex. 3 | Comp. Ex. 4 | Comp. Ex. 5 |
|---|---|---|---|---|---|---|---|---|---|
| UV irradiation condition (mJ/cm$^2$) | | 500 | 500 | 500 | 500 | 500 | 500 | 500 | 500 |
| Thickness ($\mu$m) | | 9.6 | 9.6 | 10.5 | 9.6 | 14.0 | 16.3 | 9.7 | 10.5 |
| Air permeability (s/100 mL) | | 73 | 73 | 180 | 73 | 150 | 161 | 101 | 180 |
| Porosity (%) | | 51 | 51 | - | 51 | 45 | 50 | 49 | - |
| Electrical resistance ($\Omega$) | | 0.32 | 0.32 | 0.78 | 0.32 | 0.44 | 1.29 | 0.43 | 0.80 |
| Meltdown temperature (MD) (°C) | | 195 | 197 | 198 | 148 | 178 | 250 | 185 | 148 |
| Shutdown temperature (°C) | | 140 | 140 | 140 | 140 | 162 | 200 | 138 | 140 |
| Tensile strength at 25°C (kgf/cm$^2$) | MD | 1820 | 1830 | 1120 | 1830 | 1529 | 510 | 1350 | 1125 |
| | TD | 1330 | 1300 | 820 | 1350 | 128 | 510 | 1000 | 815 |
| Puncture strength at 25°C (gf) | | 410 | 405 | 410 | 425 | 205 | 213 | 320 | 425 |
| Rupture after being exposed at 180°C for 1 minute | | X | X | X | ○ | ○ | X | X | X |
| Tensile strength after being exposed at 180°C for 1 minute (kgf/cm$^2$) | MD | 1335 | 1250 | 1150 | Not available | Not available | 500 | 860 | 183 |
| | TD | 850 | 870 | 780 | Not available | Not available | 505 | 630 | 54 |
| Puncture strength after being exposed at 180°C for 1 minute (gf) | | 225 | 210 | 225 | Not available | Not available | 210 | 130 | 65 |
| Puncture strength after being exposed at 180°C for 1 minute/ Puncture strength at 25°C (%) | | 54.9 | 51.8 | 54.9 | - | - | 98.6 | 40.6 | 15.3 |

As can be seen from Table 1, each of the separators according to Examples 1-3 has a shutdown temperature of 145°C or less, causes no rupture after being exposed at 180°C for 1 minute, and shows a ratio of the puncture after being exposed at 180°C for 1 minute based on the puncture strength at 25°C of 50% or more. In other words, it can be seen that each of the separators according to Examples 1-3 maintains the mechanical strength to a significant level, even after being exposed at 180°C for 1 minute.

On the contrary, the separator according to Comparative Example 1 shows a shutdown temperature of 140°C or less, but causes rupture after being exposed at 180°C for 1 minute.

The separator according to Comparative Example 2 shows a shutdown temperature of 140°C or higher, and causes rupture after being exposed at 180°C for 1 minute.

The separator according to Comparative Example 3 is not ruptured after being exposed at 180°C for 1 minute, but shows a shutdown temperature of higher than 140°C.

The separator according to Comparative Example 4 shows a shutdown temperature of 145°C or less and causes no rupture after being exposed at 180°C for 1 minute, but shows a ratio of the puncture after being exposed at 180°C for 1 minute based on the puncture strength at 25°C of less than 50%. In other words, it can be seen that the separator undergoes significant degradation of mechanical strength, when being exposed to a high temperature of 180°C.

The separator according to Comparative Example 5 shows a shutdown temperature of 145°C or less and causes no rupture after being exposed at 180°C for 1 minute, but shows a ratio of the puncture after being exposed at 180°C for 1 minute based on the puncture strength at 25°C of less than 50%. In other words, it can be seen that the separator undergoes significant degradation of mechanical strength, when being exposed to a high temperature of 180°C.

**Claims**

1.  A crosslinked structure-containing polyolefin porous support which comprises a crosslinked structure comprising polymer chains interconnected directly with one another, has a shutdown temperature of 145°C or less, causes no rupture after being exposed at 180°C for 1 minute, and shows a ratio of the puncture strength after being exposed at 180°C for 1 minute based on the puncture strength at 25°C of 50-100%.

2.  The crosslinked structure-containing polyolefin porous support according to claim 1, which shows a puncture strength of 50 gf or more after being exposed at 180°C for 1 minute.

3.  The crosslinked structure-containing polyolefin porous support according to claim 1, which shows a tensile strength of 500 kgf/cm$^2$ or more in each of the machine direction and the transverse direction, after being exposed at 180°C for 1 minute.

4.  The crosslinked structure-containing polyolefin porous support according to claim 1, which has a crosslinking degree of 10-45%.

5.  A crosslinked structure-containing separator for a lithium secondary battery comprising the crosslinked structure-containing polyolefin support as defined in any one of claims 1 to 4.

6.  The crosslinked structure-containing separator for a lithium secondary battery according to claim 5, which further comprises an inorganic composite porous layer disposed on at least one surface of the crosslinked structure-containing polyolefin porous support and comprising an inorganic filler and a binder polymer.

7.  The crosslinked structure-containing separator for a lithium secondary battery according to claim 5, which further comprises: an inorganic composite porous layer disposed on at least one surface of the crosslinked structure-containing polyolefin porous support and comprising an inorganic filler and a first binder polymer; and a porous adhesive layer disposed on the inorganic composite porous layer and comprising a second binder polymer.

8.  The crosslinked structure-containing separator for a lithium secondary battery according to claim 5, which has a meltdown temperature of 160°C or higher.

9.  The crosslinked structure-containing separator for a lithium secondary battery according to claim 7, wherein the weight ratio of the inorganic filler to the first binder polymer is 95:5-99.9:0.1.

10. The crosslinked structure-containing separator for a lithium secondary battery according to claim 7, wherein the first binder polymer comprises an acrylic polymer, polyacrylic acid, styrene butadiene rubber, polyvinyl alcohol, or two or more of them.

11. The crosslinked structure-containing separator for a lithium secondary battery according to claim 7, wherein the second binder polymer comprises poly(vinylidene fluoride), poly(vinylidene fluoride-co-hexafluoropropylene), poly(vinylidene fluoride-co-trichloroethylene), poly(vinylidene fluoride-co-tetrafluoroethylene), poly(vinylidene fluoride-co-trifluoroethylene), poly(methyl methacrylate), poly(ethylhexyl acrylate), poly(butyl acrylate), poly(acrylonitrile), poly(vinyl pyrrolidone), poly(vinyl acetate), poly(ethylhexyl acrylate-co-methyl methacrylate), poly(ethylene-co-vinyl acetate), polyethylene oxide, poly(arylate), or two or more of them.

12. A method for manufacturing a crosslinked structure-containing separator for a lithium secondary battery, comprising the steps of:

    preparing a polyolefin porous support comprising a photoinitiator; and
    irradiating ultraviolet rays to the polyolefin porous support comprising a photoinitiator,
    wherein the content of the photoinitiator is 0.015-0.36 parts by weight based on 100 parts by weight of the polyolefin porous support.

13. The method for manufacturing a crosslinked structure-containing separator for a lithium secondary battery according to claim 12, wherein the step of preparing a polyolefin porous support comprising a photoinitiator comprises coating and drying a photo-crosslinking composition containing a photoinitiator and a solvent on the outer side of the polyolefin porous support.

**14.** The method for manufacturing a crosslinked structure-containing separator for a lithium secondary battery according to claim 13, wherein the photo-crosslinking composition is a slurry for forming an inorganic composite porous layer comprising an inorganic filler, a binder polymer, the photoinitiator and the solvent.

**15.** The method for manufacturing a crosslinked structure-containing separator for a lithium secondary battery according to claim 13, wherein the step of coating and drying a photo-crosslinking composition containing a photoinitiator and a solvent on the outer side of the polyolefin porous support comprises:

coating a slurry for forming an inorganic composite porous layer comprising an inorganic filler, a first binder polymer and a dispersion medium on at least one surface of the polyolefin porous support, followed by drying, to form an inorganic composite porous layer; and
applying a coating solution for forming a porous adhesive layer comprising a second binder polymer, the photoinitiator and the solvent to the top surface of the inorganic composite porous layer, followed by drying.

**16.** The method for manufacturing a crosslinked structure-containing separator for a lithium secondary battery according to claim 12, wherein the photoinitiator comprises a Type 2 photoinitiator.

**17.** The method for manufacturing a crosslinked structure-containing separator for a lithium secondary battery according to claim 12, wherein the photoinitiator comprises thioxanthone (TX), a thioxanthone derivative, benzophenone (BPO), a benzophenone derivative, or two or more of them.

**18.** The method for manufacturing a crosslinked structure-containing separator for a lithium secondary battery according to claim 12, wherein the ultraviolet rays are irradiated at an irradiation light dose of 10-2000 mJ/cm$^2$.

**19.** A lithium secondary battery comprising a positive electrode, a negative electrode and a separator interposed between the positive electrode and the negative electrode, wherein the separator is the crosslinked structure-containing separator for a lithium secondary battery as defined in claim 5.

FIG. 1

<u>1</u>

20

10

FIG. 2

<u>1'</u>

30'

20'

10'

## INTERNATIONAL SEARCH REPORT

| International application No. |
| --- |
| **PCT/KR2022/006586** |

| A. | CLASSIFICATION OF SUBJECT MATTER |
| --- | --- |

**H01M 50/417**(2021.01)i; **H01M 50/489**(2021.01)i; **H01M 50/451**(2021.01)i; **H01M 50/403**(2021.01)i; **H01M 10/052**(2010.01)i

According to International Patent Classification (IPC) or to both national classification and IPC

| B. | FIELDS SEARCHED |
| --- | --- |

Minimum documentation searched (classification system followed by classification symbols)

H01M 50/417(2021.01); B29C 48/00(2019.01); B29C 48/08(2019.01); C08J 9/26(2006.01); H01G 11/52(2013.01); H01M 2/14(2006.01); H01M 2/16(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 분리막(separator), 광개시제(photoinitiator), 올레핀고분자(polyolefin), 셧다운 온도(shutdown temperature), 천공 강도(puncture strength)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2015-0071378 A (HANWHA TOTAL PETROCHEMICAL CO., LTD.) 26 June 2015 (2015-06-26)<br>See paragraphs [0006]-[0009] and [0014]-[0025]. | 12,16-17 |
| Y | | 13-15,18 |
| A | | 1-11,19 |
| Y | KR 10-2020-0112749 A (LG CHEM, LTD.) 05 October 2020 (2020-10-05)<br>See claim 5. | 13-15 |
| Y | KR 10-2016-0043768 A (UNIST(ULSAN NATIONAL INSTITUTE OF SCIENCE AND TECHNOLOGY)) 22 April 2016 (2016-04-22)<br>See claims 1 and 9. | 14 |
| Y | KR 10-2013-0092245 A (LG CHEM, LTD.) 20 August 2013 (2013-08-20)<br>See paragraphs [0030]-[0033] and [0053]. | 15,18 |

☑ Further documents are listed in the continuation of Box C.  ☑ See patent family annex.

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
| --- | --- |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **25 August 2022** | **26 August 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

## INTERNATIONAL SEARCH REPORT

| International application No. |
| --- |
| **PCT/KR2022/006586** |

**C.    DOCUMENTS CONSIDERED TO BE RELEVANT**

| Category* | Citation of document, with indication, where appropriate, of the relevant passages | Relevant to claim No. |
| --- | --- | --- |
| A | KR 10-2020-0125870 A (W-SCOPE et al.) 05 November 2020 (2020-11-05)<br>    See claims 1 and 4-5. | 1-19 |

Form PCT/ISA/210 (second sheet) (July 2019)

**EP 4 329 075 A1**

| Patent document cited in search report | | | Publication date (day/month/year) | Patent family member(s) | | | Publication date (day/month/year) |
|---|---|---|---|---|---|---|---|
| KR | 10-2015-0071378 | A | 26 June 2015 | KR | 10-1536062 | B1 | 10 July 2015 |
| | | | | WO | 2015-093683 | A1 | 25 June 2015 |
| | | | | WO | 2015-093683 | A8 | 01 October 2015 |
| KR | 10-2020-0112749 | A | 05 October 2020 | CN | 113632307 | A | 09 November 2021 |
| | | | | EP | 3937275 | A1 | 12 January 2022 |
| | | | | JP | 2022-527738 | A | 06 June 2022 |
| | | | | US | 2022-0173479 | A1 | 02 June 2022 |
| | | | | WO | 2020-197198 | A1 | 01 October 2020 |
| KR | 10-2016-0043768 | A | 22 April 2016 | | None | | |
| KR | 10-2013-0092245 | A | 20 August 2013 | KR | 10-1637477 | B1 | 07 July 2016 |
| KR | 10-2020-0125870 | A | 05 November 2020 | CN | 111864159 | A | 30 October 2020 |
| | | | | EP | 3731305 | A1 | 28 October 2020 |
| | | | | JP | 2020-182930 | A | 12 November 2020 |
| | | | | KR | 10-2181119 | B1 | 23 November 2020 |
| | | | | US | 2020-0343506 | A1 | 29 October 2020 |

<div align="center">

**INTERNATIONAL SEARCH REPORT**
**Information on patent family members**

</div>

International application No.

**PCT/KR2022/006586**

Form PCT/ISA/210 (patent family annex) (July 2019)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020210059584